# EUROPEAN PATENT SPECIFICATION

(11) **EP 3 527 948 B1**
(45) Date of publication and mention of the grant of the patent: **20.01.2021**
(21) Application number: 18157688.5
(22) Date of filing: 20.02.2018
(51) Int. Cl.: G01C 25/00, G01C 21/16, G01P 21/00

(54) **AIR DATA AIDED INERTIAL MEASUREMENT UNIT**
LUFTDATENGESTÜTZTE INERTIALE MESSEINHEIT
UNITÉ DE MESURE INERTIELLE ASSISTÉE PAR DONNÉES D'AIR

(43) Date of publication of application: 21.08.2019
(73) Proprietor: Rosemount Aerospace Inc., Burnsville, MN 55306-4898 (US)
(72) Inventor: ELL, Todd, Savage, MN 55378 (US)
(74) Representative: Dehns

(56) References cited:
- US-A- 5 527 003
- US-B1- 7 418 364
- US-B1- 8 583 371

## Description

### BACKGROUND

This disclosure relates generally to inertial measurement units, and more particularly to inertial measurement units that utilize air data parameters to produce error-compensated output values.

Many complex vehicle guidance systems, such as aircraft inertial navigation systems, utilize an inertial measurement unit (IMU) that senses and outputs current acceleration forces experienced by the IMU as well as changes in rotational position (e.g., roll, pitch, and yaw). Such IMUs typically sense the current acceleration in three dimensions via a triad of accelerometers, each oriented along one of three mutually-orthogonal axes. Similarly, changes in rotational position are typically sensed via a triad of gyroscopes, each oriented along one of the three mutually-orthogonal axes.

Outputs of the IMU (e.g., a three-axis acceleration vector as well as a three-axis vector representing changes in rotational speed) are often integrated over time by an inertial navigation system to arrive at a position and orientation of the vehicle relative to a known starting position and orientation via, e.g., dead reckoning techniques. However, such integration techniques can compound sensor errors over time. Some sensor errors, such as those due to temperature, can be considered deterministic in nature, and therefore compensated for in the integration techniques via pre-defined correction factors. Other errors, such as turn-on to turn-on biases and scale factor errors can be unpredictable or stochastic in nature, thereby preventing the use of such pre-defined correction factors for effective error compensation operations. The use of a fiber optic gyroscope (FOG) or ring laser gyroscope (RLG) can provide greater accuracy and consistency of measurements than, e.g., micro-electro-mechanical system sensors, but at significant added cost. Accordingly, accuracy of measurement is typically sacrificed for the benefit of reduced cost when utilizing MEMS sensors for measuring acceleration forces and rotational position changes in IMUs.

In this context, US7418364B1 discloses a method and a system that senses the attitude of an accelerating object by measuring acceleration with accelerometers in three orthogonal axes and measuring angular rate with angular rate sensors disposed about each such axis to compute attitude of the object accurately relative to a vertical axis. A processor updates a quaternion representation of attitude based upon the angular rate of the object, and a corrective rate signal is determined from level frame acceleration as a reference for a Kalman filter in calculating the attitude of the object. When velocity or airspeed is available from an external source, an aiding algorithm is employed to provide accurate attitude representations throughout all flight regimes.

US5527003A discloses an in-field method for correcting the thermal bias error calibration of the gyros of a strapdown inertial navigation system. The method is begun after initial alignment while the aircraft remains parked with the inertial navigation system switched to navigation mode. Measurements are made of navigation system outputs and of gyro temperatures during this data collection period. A Kalman filter processes the navigation system outputs during this time to generate estimates of gyro bias error that are associated with the corresponding gyro temperature measurements. Heading error correcting is performed after the extended alignment data collection period as the aircraft taxis prior to takeoff. The gyro bias error-versus-temperature data acquired, along with the heading error corrections, are employed to recalibrate the existing thermal model of gyro bias error by means of an interpolation process that employs variance estimates as weighting factors.

US8583371B1 discloses systems and methods that improve the pointing accuracy of a spacecraft using temperature-sensitive gyros (e.g., MEMS gyros) by using a temperature bias model to compensate for temperature biases of the gyros and using attitude data (e.g., star tracker data) to automatically and continuously calibrate the temperature bias model over the life of the spacecraft. When star tracker data is unavailable (e.g., due to sun interference), the most recently updated temperature bias model is used in open-loop to provide improved estimation of the gyro biases and improved attitude estimation.

### SUMMARY

According to a first aspect of the present invention there is provided an inertial measurement unit as claimed in claim 1.

According to a second aspect of the present invention there is provided a method as claimed in claim 11.

### BRIEF DESCRIPTION OF THE DRAWINGS

FIG. 1 is a schematic block diagram illustrating an example inertial measurement unit (IMU) that utilizes air data inputs to produce error-corrected acceleration and angular rate outputs.
FIG. 2 is a schematic block diagram illustrating further details of the inertial sensor compensation and correction module of FIG. 1 to produce error-corrected acceleration and angular rate outputs.
FIG. 3 is a schematic block diagram illustrating further details of the attitude determination module of FIG. 1 to determine a vehicle attitude using the error-corrected and compensated acceleration and angular rate outputs from the inertial sensor compensation and correction module.
FIG. 4 is a schematic block diagram illustrating further details of the Kalman estimator module of FIG. 1 to produce bias and scale factor error correction values that are utilized by the IMU to produce error-corrected acceleration and angular rate outputs.
FIG. 5 is a schematic block diagram illustrating details of the Kalman estimator module of FIG. 1 to produce an initial attitude quaternion representing an initial attitude of the IMU

### DETAILED DESCRIPTION

As described herein, an inertial measurement unit (IMU) utilizes air data parameter values, such as true airspeed and angle of attack, to produce error-corrected angular rate and acceleration output values. The IMU determines vehicle attitude parameters based on sensed acceleration and rotational position information received from accelerometers and gyroscopes of the IMU Air data parameter values received and/or calculated by the IMU are utilized to estimate bias and/or scale factor errors of the accelerometer and gyroscope outputs. The IMU removes the estimated errors from the sensed angular rate and acceleration parameters to produce error-corrected output values, thereby increasing an accuracy of the IMU outputs.

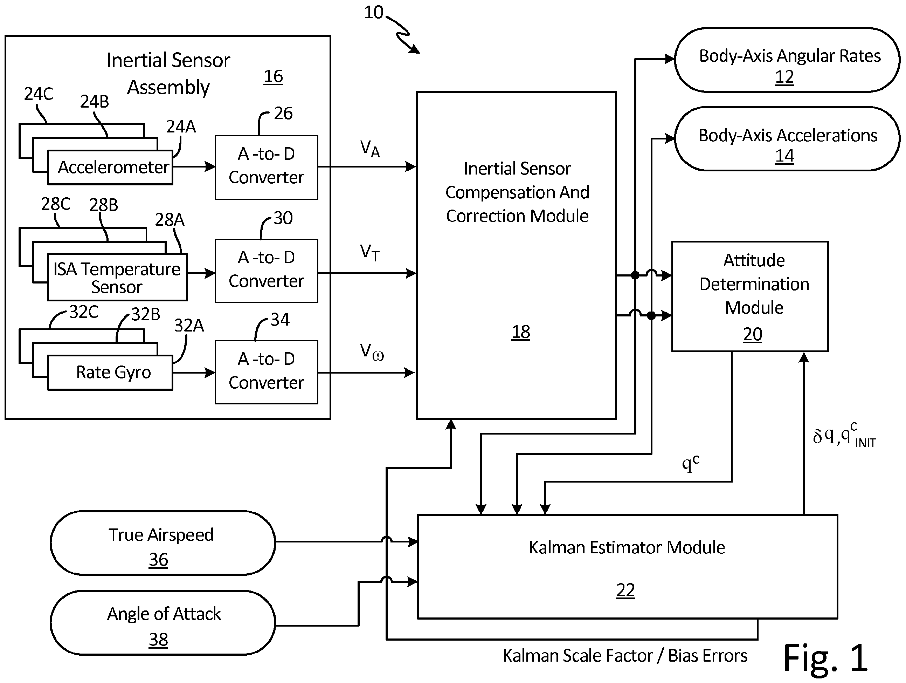

FIG. 1 is a schematic block diagram illustrating inertial measurement unit (IMU) 10 that utilizes air data inputs to produce error-corrected body-axis accelerations 12 and body-axis angular rates 14. As illustrated in FIG. 1, IMU 10 includes inertial sensor assembly 16, inertial sensor compensation and correction module 18, attitude determination module 20, and Kalman estimator module 22. Inertial sensor assembly 16 includes accelerometers 24A, 24B, and 24C, analog-to-digital converter 26, temperature sensors 28A, 28B, and 28C, analog-to-digital converter 30, rate gyroscopes 32A, 32B, and 32C, and analog-to-digital converter 34. As further illustrated, IMU 10 receives true airspeed 36 and angle of attack 38 as inputs, and produces body-axis angular rates 12 and body-axis accelerations 14 as outputs. In other examples, rather than receive true airspeed 36 and angle of attack 38 as inputs, IMU 10 can receive sensor measurements, such as static pressure measurements, total pressure measurements, total air temperature measurements, or other sensor measurements that are usable by IMU 10 to derive true airspeed 36 and angle of attack 38. Body-axis angular rates 12 and body-axis accelerations 14 output from IMU 10 can be utilized by, e.g., an inertial navigation system of an aircraft or other moving body to which IMU 10 is mounted.

Accelerometers 24A, 24B, and 24C of inertial sensor assembly 16 form a 3-axis triad of accelerometers, each mounted (e.g., on a circuit board) and aligned to sense acceleration forces along one of three mutually-orthogonal axes. Rate gyroscopes 32A, 32B, and 32C are similarly mounted (e.g., on the same circuit board) and aligned to sense a rotational rate along one of three mutually-orthogonal axes (e.g., roll rate, pitch rate, and yaw rate). Temperature sensors 28A, 28B, and 28C are mounted (e.g., on the same circuit board) proximate accelerometers 24A-24C and rate gyroscopes 32A-32C to sense a temperature of an operational environment within inertial sensor assembly 16. For instance, temperature sensor 28A can be mounted proximate accelerometer 24A and rate gyroscope 32A to sense a temperature of an operational environment within inertial sensor assembly 16 proximate accelerometer 24A and rate gyroscope 32A. Temperature sensor 28B can be mounted proximate accelerometer 24B and rate gyroscope 32B to sense a temperature of an operational environment within inertial sensor assembly 16 proximate accelerometer 24B and rate gyroscope 32B. Temperature sensor 28C can be mounted proximate accelerometer 24C and rate gyroscope 32C to sense a temperature of an operational environment within inertial sensor assembly 16 proximate accelerometer 24C and rate gyroscope 32C. Any one or more of accelerometers 24A-24B, temperature sensors 28A-28C, and rate gyroscopes 32A-32C can be implemented as micro-electro-mechanical systems (MEMS).

As illustrated, inertial sensor assembly 16 further includes analog-to-digital (A-toD) converters 26, 30, and 34. Each of A-to-D converters 26, 30, and 34 includes discrete and/or integrated logic circuitry to convert an analog signal input, such as a voltage, to a digital numerical representation proportional to a magnitude of the analog signal input. In operation, A-to-D converter 26 converts a voltage output from each of accelerometers 24A-24C to a digital numerical representation proportional to a magnitude of the voltage output from the respective one of accelerometers 24A-24C. A-to-D converter 30 converts a voltage output from each of temperature sensors 28A-28C to a digital numerical representation proportional to a magnitude of the voltage output from the respective one of temperature sensors 28A-28C. A-to-D converter 34 converts a voltage output from each of rate gyroscopes 32A-32C to a digital numerical representation proportional to a magnitude of the voltage output from the respective one or rate gyroscopes 32A-32C.

Each of inertial sensor compensation and correction module 18, attitude determination module 20, and Kalman estimator module 22 can be implemented in hardware, software, or combinations of hardware and software. For example, IMU 10 can include one or more processors and computer-readable memory encoded with instructions that, when executed by the one or more processors, cause IMU 10 to operate in accordance with techniques described herein. Examples of the one or more processors include any one or more of a microprocessor, a controller, a digital signal processor (DSP), an application specific integrated circuit (ASIC), a field-programmable gate array (FPGA), or other equivalent discrete or integrated logic circuitry. Computer-readable memory of IMU 10 can be configured to store information within IMU 10 during operation. The computer-readable memory can be described, in some examples, as computer-readable storage media. In some examples, a computer-readable storage medium can include a non-transitory medium. The term "non-transitory" can indicate that the storage medium is not embodied in a carrier wave or a propagated signal. In certain examples, a non-transitory storage medium can store data that can, over time, change (e.g., in RAM or cache). Computer-readable memory of IMU 10 can include volatile and non-volatile memories. Examples of volatile memories can include random access memories (RAM), dynamic random access memories (DRAM), static random access memories (SRAM), and other forms of volatile memories Examples of non-volatile memories can include magnetic hard discs, optical discs, floppy discs, flash memories, or forms of electrically programmable memories (EPROM) or electrically erasable and programmable (EEPROM) memories.

As illustrated in FIG. 1, the outputs of A-to-D converter 26, A-to-D converter 30, and A-to-D converter 34 are provided as inputs to inertial sensor compensation and correction module 18, which also receives Kalman scale factor and bias error corrections from Kalman estimator module 22. Inertial sensor compensation and correction module 18 outputs body-axis angular rates 12 and body-axis accelerations 14 (i.e., error-corrected output values) via, e.g., a data bus or other communicative connection for use by an inertial navigation system or other consuming system. Body-axis angular rates 12 and body-axis accelerations 14 are also provided to attitude determination module 20 and Kalman estimator module 22 as inputs. Attitude determination module 20 further receives tilt error correction values δq and initial attitude quaternion q^{C}ᵢₙᵢₜ from Kalman estimator module 22 and provides attitude information outputs to Kalman estimator module 22 in the form of attitude quaternion q^{C}. Kalman estimator module 22 further receives true airspeed 36 and angle of attack 38 from, e.g., an aircraft air data system, and provides Kalman scale factor and bias error corrections to inertial sensor compensation and correction module 18 for use in modifying inputs received from accelerometers 24A-24C and rate gyroscopes 32A-32C to produce error-corrected outputs body-axis angular rates 12 and body-axis accelerations 14, as is further described below.

In operation, accelerometers 24A-24C and rate gyroscopes 32A-32C sense acceleration forces and rotational rates along the three mutually-orthogonal axes. Temperature sensors 28A-28C sense a temperature of an operational environment of accelerometers 24A-24C and rate gyroscopes 32A-32C, for example on one or more circuit boards within a housing of IMU 10 that encloses components of IMU 10. The outputs of each of accelerometers 24A-24C, temperature sensors 28A-28C, and rate gyroscopes 32A-32C are provided to inertial sensor compensation and correction module 18 via A-to-D converters 26, 30, and 34, illustrated in FIG. 1 as V_{A}, V_{T}, and V_{ω}. That is, V_{A} represents a three-dimensional vector, each element of the vector corresponding to the output from one of accelerometers 24A, 24B, and 24C. Similarly, V_{T} represents a three-dimensional vector, each element corresponding to the output from one of temperature sensors 28A, 28B, and 28C. V_{ω} also represents a three-dimensional vector, each element of the vector corresponding to the output from one of rate gyroscopes 32A, 32B, and 32C.

Inertial sensor compensation and correction module 18 applies compensation and correction factors to adjust each of the inputs V_{A}, V_{T}, and V_{ω} to produce body-axis angular rates 12 and body-axis accelerations 14. Body-axis angular rates 12 and body-axis accelerations 12 each represent three-axis outputs of error-compensated and error-corrected output values corresponding to the adjusted inputs V_{A}, V_{T}, and V_{ω}. As is further described below, inertial sensor compensation and correction module 18 applies compensation and correction factors to inputs V_{A}, V_{T}, and V_{ω} to adjust inputs V_{A}, V_{T}, and V_{ω} to compensate for sensor scale factor errors corresponding to an error in the slope of the sensor output over a temperature range, bias errors corresponding to a non-zero offset in the sensor output over the temperature range, non-linearity errors corresponding to non-linearity of the sensor output over the temperature range, and non-orthogonality errors corresponding to offsets in the mutual-orthogonality of the sensor installations along the three axes within inertial sensor assembly 16. Such temperature-dependent scale factor errors, temperature-dependent bias errors, non-linearity errors, and non-orthogonality errors can be considered deterministic in nature. As such, compensation and correction factors applied by inertial sensor compensation and correction module 18 to compensate sensor inputs V_{A}, V_{T}, and V_{ω} for the deterministic errors can be pre-determined during, e.g., a testing phase in a laboratory or manufacturing facility and stored in computer-readable memory of IMU 10 for use by inertial sensor compensation and correction module 18 during operation.

Accordingly, inertial sensor compensation and correction module 18 applies compensation and correction factors to adjust sensor inputs V_{A}, V_{T} and V_{ω} to compensate for deterministic errors, such as temperature dependent errors and sensor installation position and alignment errors. In addition, as illustrated in FIG. 1, inertial sensor compensation and correction module 18 receives Kalman scale factor and bias error correction values from Kalman estimator module 22 and also applies the Kalman scale factor and bias error correction values to sensor inputs V_{A}, V_{T} and V_{ω} to correct for non-deterministic sensor errors, as is further described below.

Inertial sensor compensation and correction module 18 outputs the error-compensated and error-corrected sensor inputs V_{A}, V_{T} and V_{ω} (i.e., compensated and corrected via application of the temperature-dependent scale factor error compensation values, the Kalman scale factor error correction values, the temperature-dependent bias error compensation values, the Kalman bias error correction values, the non-linearity error compensation values, and the non-orthogonality error compensation values) as body-axis angular rates 12 and body-axis accelerations 14. As such, body-axis angular rates 12 and body-axis accelerations 14 represent error-compensated and error-corrected output values of rate gyroscopes 32A-32C and accelerometers 24A-24C, respectively, after compensation for deterministic errors (e.g., temperature-dependent scale factor errors, temperature-dependent bias errors, sensor non-linearity errors, and non-orthogonality errors) and correction for non-deterministic scale factor and bias errors that may arise during operation of IMU 10 (e.g., turn-on to turn-on bias and scale factor errors, vibration-related bias and scale factor errors, or other non-deterministic errors).

As illustrated in FIG. 1, Kalman estimator module 22 receives as inputs body-axis angular rates 12 and body-axis accelerations 14 from inertial sensor compensation and correction module 18, as well as true airspeed 36 and angle of attack 38 from, e.g., an aircraft air data system. In addition, Kalman estimator module 22 receives attitude information corresponding to aircraft roll and pitch in the form of attitude quaternion q^{C} from attitude determination module 20.

As is further described below, attitude determination module 20 utilizes body-axis angular rates 12 and body-axis accelerations 14 to determine an attitude quaternion q^{C} corresponding to a coordinate transform between local level and body-axis roll and pitch of, e.g., an aircraft within which IMU 10 is installed. The determined attitude quaternion q^{C} is provided to Kalman estimator module 22.

Kalman estimator module 22 utilizes attitude quaternion q^{C} determined by attitude determination module 20 as well as body-axis angular rates 12 and body-axis accelerations 14 to determine a change in an integrated body-axis acceleration over a relative short time duration (e.g., 0.5 seconds, 1.0 second, or other time durations), as is further described below. Kalman estimator module 22 compares the determined change in the integrated body-axis acceleration over the time duration to a difference in the received true airspeed 36 over the same time duration to determine an airspeed difference value. Kalman estimator module 22 provides the airspeed difference value as input to an extended Kalman filter implemented by Kalman estimator module 22 to determine estimated scale factor errors and bias errors for each of accelerometers 24A-24C and rate gyroscopes 32A-32C. The estimated scale factor errors and bias errors for each of accelerometers 24A-24C and rate gyroscopes 32A-32C are provided to inertial sensor compensation and correction module 18 as Kalman scale factor error correction values and Kalman bias error correction values associated with each of accelerometers 24A-24C and rate gyroscopes 32A-32C.

Inertial sensor compensation module 18 applies the received Kalman scale factor error correction values and bias error correction values, the temperature-dependent scale factor and bias error compensation values, the non-linearity error compensation values, and the non-orthogonality error compensation values to each of the received inputs from accelerometers 24A-24C and rate gyroscopes 32A-32C to produce error-corrected output values body-axis angular rates 12 and body-axis accelerations 14. Accordingly, IMU 10, implementing techniques of this disclosure, iteratively determines Kalman scale factor and bias error correction values that are applied to (e.g., subtracted from, added to, or otherwise applied to) sensed values from accelerometers 24A-24C and rate gyroscopes 32A-32C to correct for non-deterministic scale factor errors and bias errors that are unpredictable in nature. The compensation for deterministic errors (e.g., via the temperature-dependent scale factor and bias error compensation values, the non-linearity error compensation values, and the non-orthogonality error compensation values) as well as the non-deterministic errors (e.g., via the Kalman scale factor and bias error correction values) increases the accuracy of body-axis angular rates 12 and body-axis accelerations 14 representing outputs of IMU 10 to consuming systems. As such, the techniques described herein can enable more accurate and precise operation of consuming systems, such as inertial navigation or other consuming systems.

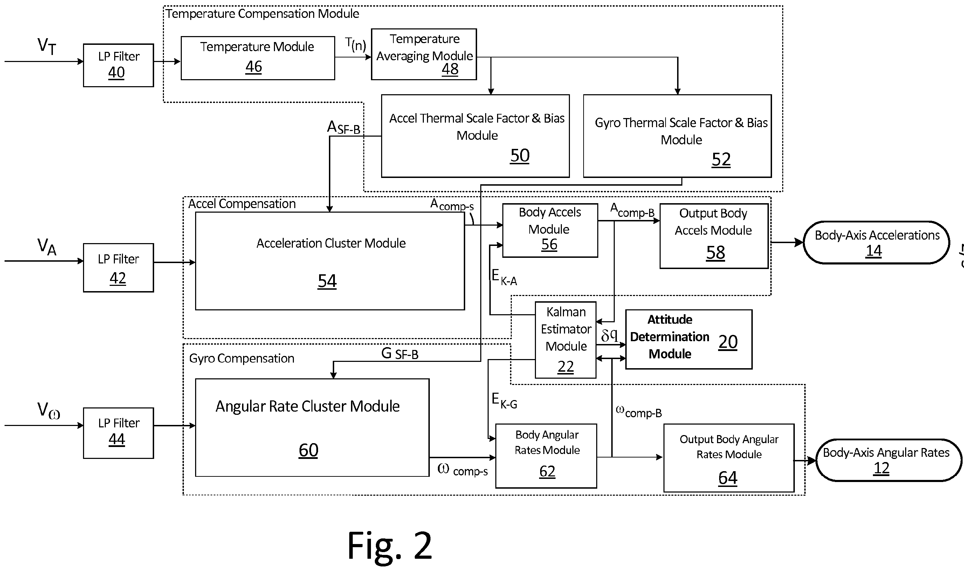

FIG. 2 is a schematic block diagram illustrating further details of inertial sensor compensation and correction module 18 of FIG. 1 to produce error-compensated body-axis angular rates 12 and body-axis accelerations 14. As illustrated in FIG. 2, inertial sensor compensation and correction module 18 includes temperature low-pass filter 40, accelerometer low-pass filter 42, rate gyroscope low-pass filter 44, temperature module 46, temperature averaging module 48, accelerometer thermal scale factor and bias module 50, rate gyroscope thermal scale factor and bias module 52, acceleration cluster module 54, body accelerations module 56, output body accelerations module 58, angular rate cluster module 60, body angular rates module 62, and output body angular rates module 64. As further illustrated, inertial sensor compensation and correction module 18 receives V_{T}, V_{A}, and V_{ω} as inputs from inertial sensor assembly 16 (FIG. 1). In addition, inertial sensor compensation and correction module 18 receives Kalman accelerometer scale factor and bias error correction values E_{K-A} and Kalman rate gyroscope scale factor and bias error correction values E_{K-G} from Kalman estimator module 22. Inertial sensor compensation and correction module 18 outputs body-axis accelerations 14 and body-axis angular rates 12 via, e.g., one or more communication data buses for use by a consuming system, such as an aircraft inertial navigation system, stability augmentation system, or other consuming system. In addition, inertial sensor compensation and correction module 18 provides compensated and corrected body-axis accelerations A_{comp-B} as input to Kalman estimator module 22 as well as compensated and corrected body-axis angular rates ω_{comp-B} as input to both Kalman estimator module 22 and attitude determination module 20. Kalman estimator module 22 provides tilt error correction values δq as input to attitude determination module 20.

Each of temperature low-pass filter 40, accelerometer low-pass filter 42, and rate gyroscope low-pass filter 44 are low-pass filters (e.g., Butterworth low-pass filters or other types of low-pass filters) implemented in hardware and/or software and configured to pass signals with frequencies lower than a cutoff frequency and attenuate signals with frequencies higher than the cutoff frequency. Each of temperature low-pass filter 40, accelerometer low-pass filter 42, and rate gyroscope low-pass filter 44 can be configured with a same or different cutoff frequency.

The output of temperature low-pass filter 40 is provided to temperature module 46, which in turn provides temperatures T(n) as outputs to each of accelerometer thermal scale factor and bias module 50 and rate gyroscope thermal scale factor and bias module 52. Accelerometer thermal scale factor and bias module 50 outputs temperature-dependent accelerometer scale factor and bias error compensation values A_{SF-B} to acceleration cluster module 54. Rate gyroscope thermal scale factor and bias module 52 outputs temperature-dependent rate gyroscope scale factor and bias error compensation values G_{SF-B} to angular rate cluster module 60. The combined operations of temperature module 46, temperature averaging module 48, accelerometer thermal scale factor and bias module 50, and rate gyroscope thermal scale factor and bias module 52 form temperature compensation operations that provide temperature compensation scale factor and bias error compensation values for application to (e.g., subtraction from) input values sensed by accelerometers 24A-24C and rate gyroscopes 32A-32C (FIG. 1).

Acceleration cluster module 54 receives the temperature compensation scale factor and bias error compensation values A_{SF-B} from accelerometer thermal scale factor and bias module 50 and applies the temperature-dependent accelerometer scale factor error compensation values and the temperature-dependent accelerometer bias error compensation values, as well as the accelerometer non-linearity error compensation values and the accelerometer non-orthogonality error compensation values (e.g., stored in computer-readable memory of IMU 10) to produce compensated accelerometer values A_{comp-S} in the sensor axis that are provided to body accelerations module 56. Body accelerations module 56 receives the compensated sensor-axis accelerations A_{comp-S} from acceleration cluster module 54 and Kalman accelerometer scale factor and bias error correction values E_{K-A} from Kalman estimator module 22. Body accelerations module 56 converts the compensated sensor-axis accelerations A_{comp-S} to the aircraft (or other vehicle) body-axis and applies the Kalman accelerometer scale factor and bias error correction values E_{K-A} to produce compensated and corrected accelerometer values A_{comp-B} in the body-axis that are provided as input to both output body accelerations module 58 and Kalman estimator module 22. Output body accelerations module 58 bandwidth-limits the received compensated and corrected body-axis accelerations A_{comp-B} to produce body-axis accelerations 14. The combined operations of acceleration cluster module 54, body accelerations module 56 and output body accelerations module 58 form accelerometer compensation operations that apply both deterministic error compensation values (e.g., temperature-dependent accelerometer scale factor error compensation values, temperature-dependent accelerometer bias error compensation values, accelerometer non-linearity error compensation values, and accelerometer non-orthogonality error compensation values) and non-deterministic correction values (e.g., Kalman accelerometer scale factor error correction values and Kalman accelerometer bias error correction values) to produce body-axis accelerations 14 (i.e., accelerations along each of the three axes of accelerometers 24A-24C) that are error-compensation and error-corrected for both the deterministic and non-deterministic errors.

As further illustrated in FIG. 2, angular rate cluster module 60 receives the temperature compensation scale factor and bias error compensation values G_{SF-B} from rate gyroscope thermal scale factor and bias module 52 and applies the temperature-dependent rate gyroscope scale factor error compensation values and the temperature-dependent rate-gyroscope bias error compensation values, as well as the rate gyroscope non-linearity error compensation values and the rate gyroscope non-orthogonality error compensation values (e.g., stored in computer-readable memory of IMU 10) to produce compensated angular rate values ω_{comp-S} in the sensor axis that are provided to body angular rates module 62. Body angular rates module 62 receives the compensated sensor-axis angular rate values ω_{comp-S} from angular rate cluster module 60 and Kalman rate gyroscope scale factor and bias error correction values E_{K-G} from Kalman estimator module 22. Body angular rates module 62 converts the compensated sensor-axis angular rates ω_{comp-S} to the aircraft (or other vehicle) body-axis and applies the Kalman rate gyroscope scale factor and bias error correction values E_{K-G} to produce compensated and corrected angular rate values ω_{comp-B} in the body-axis that are provided as input to output body angular rates module 64, Kalman estimator module 22, and attitude determination module 20. Output body angular rates module 64 bandwidth-limits the received compensated and corrected body-axis angular rates ω_{comp-B} to produce body-axis angular rates 12. The combined operations of angular rate cluster module 60, body angular rates module 62 and output body angular rates module 64 form rate gyroscope compensation operations that apply deterministic error compensation values (e.g., temperature-dependent rate gyroscope scale factor error compensation values, temperature-dependent rate gyroscope bias error compensation values, rate gyroscope non-linearity error compensation values, and rate gyroscope non-orthogonality error compensation values) and non-deterministic error-correction values (e.g., Kalman rate gyroscope scale factor error correction values and Kalman rate gyroscope bias error correction values) to produce body-axis angular rates 12 (i.e., angular rates in each of the three axes of rate gyroscopes 32A-32C) that are error-compensation and error-corrected to compensate and correct for both the deterministic and non-deterministic errors.

In operation, temperature module 46 receives low-pass filtered inputs V_{T} from low-pass filter 40 which represents a three-dimensional vector, each element corresponding to a filtered digital representation of a voltage output of one of temperature sensors 28A, 28B, and 28C. Temperature module 46 converts the voltage representation associated with each of temperature sensors 28A-28C to a separate temperature value using a polynomial curve-fit having coefficients selected during, e.g., a testing phase to fit an output of the respective temperature sensors 28A-28C to a reference temperature input. Temperature module 46 provides temperatures T(n) (i.e., three temperature values, each corresponding to one of temperature sensors 28A-28C) to temperature averaging module 48. Temperature averaging module produces an average temperature output for each of the received input temperatures T(n), such as by using a moving average (e.g., over 8 samples, 10 samples, or other number of samples) or other central tendency technique. Temperature averaging module 48 provides the average temperature associated with each of temperature sensors 28A-28C to each of accelerometer thermal scale factor and bias module 50 and rate gyroscope thermal scale factor and bias module 52.

Accelerometer thermal scale factor and bias module 50 determines a temperature-dependent accelerometer scale factor error compensation value and a temperature-dependent accelerometer bias error compensation value corresponding to each of accelerometers 24A-24C. For example, accelerometer thermal scale factor and bias module 50 can apply the average input temperature value for the one of temperature sensors 28A-28C that is associated with (e.g. mounted proximate) accelerometer 24A as input to a polynomial curve fit of temperature-dependent accelerometer scale factor errors corresponding to accelerometer 24A having coefficients determined during, e.g., a testing phase (e.g., in a laboratory or manufacturing phase). Accelerometer thermal scale factor and bias module 50 can similarly apply average input temperature values for each of temperature sensors 28B and 28C that are associated with accelerometers 24B and 24C as input to separate polynomial curve fits of temperature-dependent accelerometer scale factor errors corresponding to each of accelerometer 24B and 24C having coefficients determined during the testing and/or manufacturing phase. Accelerometer thermal scale factor and bias module 50 applies the average temperature input value for each of temperature sensors 28A-28C as input to polynomial curve fits of temperature-dependent bias errors corresponding to each of accelerometers 24A-24C (each of the polynomial curve fits having coefficients determined during the testing and/or manufacturing phase) to determine temperature-dependent bias error compensation values corresponding to each of accelerometers 24A-24C.

Rate gyroscope thermal scale factor and bias module 52 determines a temperature-dependent rate gyroscope scale factor error compensation value and a temperature-dependent rate gyroscope bias error compensation value corresponding to each of rate gyroscopes 32A-32C. For example, rate gyroscope thermal scale factor and bias module 52 can apply the average input temperature value for the one of temperature sensors 28A-28C that is associated with (e.g. mounted proximate) rate gyroscope 32A as input to a polynomial curve fit of temperature-dependent rate gyroscope scale factor errors corresponding to rate gyroscope 32A having coefficients determined during, e.g., a testing phase (e.g., in a laboratory or manufacturing phase). Rate gyroscope thermal scale factor and bias module 52 can similarly apply average input temperature values for each of temperature sensors 28B and 28C that are associated with rate gyroscopes 32B and 32C as input to separate polynomial curve fits of temperature-dependent rate gyroscope scale factor errors corresponding to each of rate gyroscopes 32B and 32C having coefficients determined during the testing and/or manufacturing phase. Rate gyroscope thermal scale factor and bias module 52 applies the average temperature input value for each of temperature sensors 28A-28C as input to polynomial curve fits of temperature-dependent bias errors corresponding to each of rate gyroscopes 32A-32C (each of the polynomial curve fits having coefficients determined during the testing and/or manufacturing phase) to determine temperature-dependent bias error compensation values corresponding to each of rate gyroscopes 32A-32C.

Acceleration cluster module 54 receives the temperature-dependent accelerometer scale factor error compensation values and the temperature-dependent accelerometer bias error compensation values from accelerometer thermal scale factor and bias module 50. In addition, acceleration cluster module 54 receives low-pass filtered inputs V_{A} from low-pass filter 42 which represents a three-dimensional vector, each element corresponding to a filtered digital representation of a voltage output of one of accelerometers 24A, 24B, and 24C. Acceleration cluster module 54 converts the voltage representation of each filtered input V_{A} to an acceleration value (e.g., in meters/second/second). In addition, acceleration cluster module 54 applies the received temperature-dependent accelerometer scale factor error compensation values corresponding to each of accelerometers 24A-24C to the inputs V_{A}, such as by multiplying each of inputs V_{A} by the corresponding temperature-dependent accelerometer scale factor error compensation value. Acceleration cluster module 54 applies the received temperature-dependent accelerometer bias error compensation values corresponding to each of accelerometers 24A-24C to the inputs V_{A} via aggregation techniques (e.g., summing, subtracting, or other aggregation techniques). In addition, acceleration cluster module 54 applies (e.g., multiplies) the non-linearity error compensation values and the non-orthogonality error compensation values corresponding to each of accelerometers 24A-24C (e.g., determined during a testing and/or manufacturing phase and stored in computer-readable memory of IMU 10) to the respective inputs V_{A} to produce compensated sensor-axis accelerations A_{comp-S}. Sensor-axis accelerations A_{comp-S} therefore represent acceleration values associated with each of accelerometers 24A-24C in the sensor axis that have been compensated for deterministic errors corresponding to temperature-dependent scale factor and bias errors, sensor non-linearity errors, and non-orthogonality errors associated with a misalignment (i.e., non-mutually-orthogonal) of installation of accelerometers 24A-24C.

Body accelerations module 56 receives the compensated sensor-axis accelerations A_{comp-S} and converts the accelerations from the sensor coordinate frame to an aircraft (or other vehicle to which IMU 10 is mounted) coordinate frame using a rotational matrix such as a direction cosine matrix having direction angles configured to transform the sensor coordinate frame to the aircraft body axis frame. In addition, body accelerations module 56 receives Kalman accelerometer scale factor and bias error correction values E_{K-A} from Kalman estimator module 22. As is further described below, Kalman accelerometer scale factor and bias error correction values E_{K-A} include scale factor error correction values and bias error correction values produced by an extended Kalman filter implemented by Kalman estimator module 22, each of the scale factor error correction values and bias error correction values corresponding to one of accelerometers 24A-24C. Body accelerations module 56 applies the Kalman accelerometer scale factor and bias error correction values E_{K-A} to the compensated acceleration values A_{comp-S} to produce compensated and corrected acceleration values A_{comp-B} in the body axis corresponding to each of accelerometers 24A-24C. The body axis can be defined by three mutually-orthogonal axes, a first of the three axes directed through the nose of the aircraft, a second of the three axes directed through a bottom of the aircraft toward the Earth when the aircraft is on-ground, and a third of the three axes directed orthogonally to the first axis and to the second axis and generally through a wing of the aircraft. Compensated and corrected acceleration values A_{comp-B} therefore represent body axis (e.g., aircraft body axis) accelerations corresponding to each of accelerometers 24A-24C that are compensated for deterministic errors (e.g., temperature-dependent scale factor and bias errors, sensor non-linearity errors, and non-orthogonality errors) and corrected for non-deterministic errors via Kalman scale factor and bias error correction values E_{K-A}.

Body accelerations module 56 provides compensated and corrected acceleration values A_{comp-B} to output body accelerations module 58 and Kalman estimator module 22. Output body accelerations module 58 bandwidth-limits the output of compensated and corrected acceleration values A_{comp-B} via, e.g., an infinite impulse response (IIR) or other bandwidth-limiting filter to a defined bandwidth of a consuming system, such as an aircraft inertial navigation system. The bandwidth-limited acceleration values are provided by output body accelerations module 58 as body-axis accelerations 14.

As further illustrated in FIG. 2, temperature-dependent rate gyroscope scale factor and error compensation values and temperature-dependent rate gyroscope bias error compensation values determined by rate gyroscope thermal scale factor and bias module 52 are provided to angular rate cluster module 60 as input. In addition, angular rate cluster module 60 receives low-pass filtered inputs V_{ω} from low-pass filter 44 which represents a three-dimensional vector, each element corresponding to a filtered digital representation of a voltage output of one of rate gyroscopes 32A, 32B, and 32C. Angular rate cluster module 60 converts the voltage representation of each filtered input V_{ω} to an angular rate value (e.g., in meters/second). In addition, angular rate cluster module 60 applies the received temperature-dependent rate gyroscope scale factor error compensation values corresponding to each of rate gyroscopes 32A-32C to the inputs V_{ω}, such as by multiplying each of inputs V_{ω} by the corresponding temperature-dependent rate gyroscope scale factor error compensation value. Angular rate cluster module 60 applies the received temperature-dependent rate gyroscope bias error compensation values corresponding to each of rate gyroscopes 32A-32C to the inputs V_{ω} via aggregation techniques (e.g., summing, subtracting, or other aggregation techniques). In addition, angular rate cluster module 50 applies (e.g., multiplies) the non-linearity error compensation values and the non-orthogonality error compensation values corresponding to each of rate gyroscopes 32A-32C (e.g., determined during a testing and/or manufacturing phase and stored in computer-readable memory of IMU 10) to the respective inputs V_{ω} to produce compensated sensor-axis angular rates ω_{comp-S}. Sensor-axis angular rates ω_{comp-S} therefore represent angular rate values associated with each of rate gyroscopes 32A-32C in the sensor axis that have been compensated for deterministic errors corresponding to temperature-dependent scale factor and bias errors, sensor non-linearity errors, and non-orthogonality errors associated with a misalignment (i.e., non-mutually-orthogonal) of installation of rate gyroscopes 32A-32C.

Body angular rates module 62 receives the compensated sensor-axis angular rate values ω_{comp-S} and converts the accelerations from the sensor coordinate frame to an aircraft (or other vehicle to which IMU 10 is mounted) coordinate frame using a rotational matrix such as a direction cosine matrix having direction angles configured to transform the sensor coordinate frame to the aircraft body axis frame. In addition, body angular rates module 60 receives Kalman rate gyroscope scale factor and bias error correction values E_{K-G} from Kalman estimator module 22. As is further described below, Kalman rate gyroscope scale factor and bias error correction values E_{K-G} include scale factor error correction values and bias error correction values produced by the extended Kalman filter implemented by Kalman estimator module 22, each of the scale factor error correction values and bias error correction values corresponding to one of rate gyroscopes 32A-32C. Body angular rates module 62 applies the Kalman rate gyroscope scale factor and bias error correction values E_{K-G} to the compensated angular rate values ω_{comp-S} to produce compensated and corrected angular rate values ω_{comp-B} in the body axis corresponding to each of rate gyroscopes 32A-32C. As described above, the body axis can be defined by three mutually-orthogonal axes, a first of the three axes directed through the nose of the aircraft, a second of the three axes directed through a bottom of the aircraft toward the Earth when the aircraft is on-ground, and a third of the three axes directed orthogonally to the first axis and to the second axis and generally through a wing of the aircraft. Compensated and corrected angular rate values ω_{comp-B} therefore represent body axis (e.g., aircraft body axis) angular rates corresponding to each of rate gyroscopes 32A-32C that are compensated for deterministic errors (e.g., temperature-dependent scale factor and bias errors, sensor non-linearity errors, and non-orthogonality errors) as well as corrected for non-deterministic errors via Kalman scale factor and bias error correction values E_{K-G}.

Body angular rates module 62 provides compensated and corrected angular rate values ω_{comp-B} to each of output body angular rates module 64, attitude determination module 20, and Kalman estimator module 22. Output body angular rates module 64 bandwidth-limits the output of compensated and corrected angular rate values ω_{comp-B} via, e.g., an infinite impulse response (IIR) or other bandwidth-limiting filter to a defined bandwidth of a consuming system, such as an aircraft inertial navigation system. The bandwidth-limited angular rate values are provided by output body angular rates module 64 as body-axis angular rates 12.

Accordingly, IMU 10 implementing techniques described herein outputs body-axis angular rates 12 and body-axis accelerations 14 that are compensated to correct for deterministic errors and corrected for non-deterministic errors. The techniques of this disclosure therefore increase an accuracy of outputs of IMU 10 and enable IMU 10 to adaptively modify such outputs (i.e., body-axis angular rates 12 and body-axis accelerations 14) to account for unpredictable errors that can arise during operation of IMU 10 manifesting as sensor bias and scale factor errors.

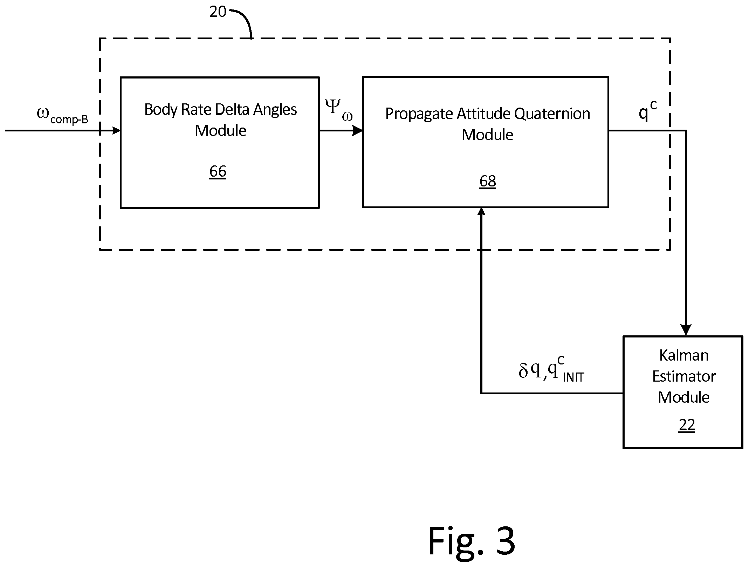

FIG. 3 is a schematic block diagram illustrating further details of attitude determination module 20 of FIG. 1. As illustrated in FIG. 3, attitude determination module 20 includes body rate delta angles module 66 and propagate attitude quaternion module 68. Attitude determination module 20 receives compensated and corrected angular rate values ω_{comp-B} as inputs from inertial sensor compensation and correction module 18. Attitude determination module 20 outputs attitude quaternion q^{C} to Kalman estimator module 22.

As illustrated in FIG. 3, body rate delta angles module 66 receives compensated and corrected angular rate values ω_{comp-B} (i.e., compensated and corrected angular rates corresponding to the outputs from each of rate gyroscopes 32A-32C of FIG. 1) from inertial sensor compensation and correction module 18 (FIGS. 1 and 2) and provides angular displacement changes ψ_{ω} corresponding to each of rate gyroscopes 32A-32C as input to propagate attitude quaternion module 68. Propagate attitude quaternion module 68 receives angular displacement changes ψ_{ω} as input from body rate delta angles module 66 as well as initial attitude quaternion q^{C}ᵢₙᵢₜ and tilt error correction values δq from Kalman estimator module 22. Propagate attitude quaternion module 68 provides attitude quaternion q^{C} as input to Kalman estimator module 22.

In operation, body rate delta angles module 66 receives compensated and corrected angular rate values ω_{comp-B} corresponding to the compensated and corrected outputs of each of rate gyroscopes 32A-32C. Body rate delta angles module 66 integrates each of the compensated and corrected angular rate values ω_{comp-B} over a relatively short time interval, such as 0.001 seconds (i.e., corresponding to a 1kHz sampling rate) to produce angular displacement changes ψ_{ω} corresponding to a change in angular displacement sensed by each of rate gyroscopes 32A-32C over the time interval.

Propagate attitude quaternion module 68 receives angular displacement changes ψ_{ω} from body rate delta angles module 66 and propagates the angular displacement changes over the time interval (e.g., 0.001 seconds) in quaternion form to produce attitude quaternion q^{C}. Propagate attitude quaternion module 68 receives initial attitude quaternion q^{C}ᵢₙᵢₜ from Kalman estimator module 22 representing an initial attitude of IMU 10, as is further described below. Propagate attitude quaternion module 68 propagates the received angular displacement changes ψ_{ω} over the time interval relative to the initial attitude quaternion q^{C}ᵢₙᵢₜ received from Kalman estimator module 22 (e.g., during a first execution of the attitude propagation operations). Propagate attitude quaternion module 68 applies tilt error correction values δq to the propagated attitude quaternion (e.g., via quaternion multiplication) to produce the error-corrected attitude quaternion q^{C}.

As such, IMU 10 implementing techniques of this disclosure determines vehicle attitude information represented by attitude quaternion q^{C} that is utilized by Kalman estimator module 22 to estimate sensor scale factor and bias errors that are provided as feedback to adjust and correct the sensed output values of accelerometers 24A-24C and gyroscopes 32A-32C.

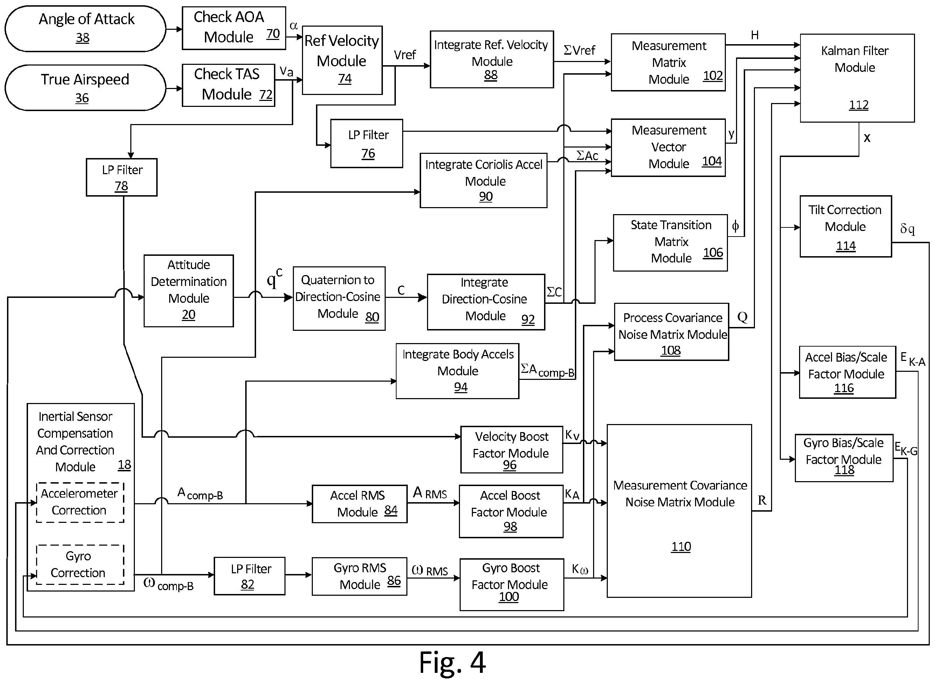

FIG. 4 is a schematic block diagram illustrating further details of Kalman estimator module 22 to produce Kalman accelerometer scale factor and bias error correction values E_{K-A}, Kalman rate gyroscope scale factor and bias error correction values E_{K-G}, and tilt error correction values δq. As illustrated in FIG. 4, Kalman estimator module 22 includes check angle of attack (AOA) module 70, check true airspeed (TAS) module 72, reference velocity module 74, low-pass filter 76, low-pass filter 78, quaternion to direction-cosine module 80, low-pass filter 82, accelerometer root mean square (RMS) module 84, rate gyroscope RMS module 86, integrate reference velocity module 88, integrate Coriolis acceleration module 90, integrate direction-cosine module 92, integrate body accelerations module 94, velocity boost factor module 96, accelerometer boost factor module 98, rate gyroscope boost factor module 100, measurement matrix module 102, measurement vector module 104, state transition matrix module 106, process covariance noise matrix module 108, measurement covariance noise matrix module 110, Kalman filter module 112, tilt correction module 114, accelerometer bias and scale factor module 116, and rate gyroscope bias and scale factor module 118. As further illustrated, Kalman estimator module 22 receives true airspeed 36 and angle of attack 38 as input from, e.g., an aircraft air data system, attitude quaternion q^{C} as input from attitude determination module 20, and compensated and corrected body-axis accelerations A_{comp-B} and compensated and corrected body-axis angular rates ω_{comp-B} as input from inertial sensor compensation and correction module 18. Kalman estimator module 22 outputs tilt error correction values δq, which are received as input by attitude determination module 20. In addition, Kalman estimator module 22 outputs accelerometer scale factor and bias error correction values E_{K-A}, as well as rate gyroscope scale factor and bias error correction values E_{K-G}. Accelerometer scale factor and bias error correction values E_{K-A} and rate gyroscope scale factor and bias error correction values E_{K-G} are received as input by inertial sensor compensation and correction module 18.

Check AOA module 70 receives angle of attack 38 as input, and outputs angle of attack α to reference velocity module 74. Check TAS module 72 receives true airspeed 36 as input and provides airspeed Va as output to reference velocity module 74 and low-pass filter 78, which passes the filtered reference velocity as input to velocity boost factor module 96. Compensated and corrected body-axis accelerations A_{comp-B} are received as input by both accelerometer RMS module 84 and integrate body accelerations module 94. Compensated and corrected body-axis angular rates ω_{comp-B} are received as input by both low-pass filter 82 and integrate Coriolis accelerations module 90. Attitude quaternion q^{C} is received as input by quaternion to direction-cosine module 80.

Reference velocity module 74 outputs body-axis reference velocity vector V_{ref}, which is received as input by each of integrate reference velocity module 88, low-pass filter 76, and integrate Coriolis acceleration module 90. Low-pass filter 76 provides a filtered output of body-axis reference velocity vector V_{ref} to measurement vector module 104. Integrate reference velocity module 88 outputs integrated body-axis reference velocity vector ΣV_{ref} to measurement matrix module 102. Integrate Coriolis accelerations module 90 outputs integrated Coriolis acceleration ΣA_{C} to measurement vector module 104. Quaternion to direction-cosine module outputs direction-cosine matrix C to integrate direction-cosine module 92, which provides integrated direction-cosine matrix ΣC as output to each of measurement matrix module 102, measurement vector module 104, and state transition matrix module 106. Integrate body accelerations module 94 outputs integrated compensated and corrected body-axis accelerations ΣA_{comp-B} to measurement vector module 104. Accelerometer RMS module 84 receives compensated and corrected body-axis accelerations A_{comp-B} from inertial sensor compensation and correction module 18, and outputs accelerations root mean square A_{RMS} to accelerometer boost factor module 98. Rate gyroscope RMS module 86 receives filtered compensated and corrected body-axis angular rates ω_{comp-B} from low-pass filter 82 and outputs angular rates root mean square ω_{RMS} to rate gyroscope boost factor module 100. Velocity boost factor module outputs velocity boost factor K_{V} to measurement covariance noise matrix module 110. Accelerometer boost factor module 98 outputs acceleration boost factor K_{A}, which is received as input by each of process covariance noise matrix module 108 and measurement covariance noise matrix module 110. Rate gyroscope boost factor module 100 outputs angular rate boost factor K_{ω} to each of process covariance noise matrix module 108 and measurement covariance noise matrix module 110.

Measurement matrix module 102 outputs measurement matrix H to Kalman filter module 112. Measurement vector module 104 provides measurement vector y as input to Kalman filter module 112. State transition matrix module 106 outputs state transition matrix φ, which is received as input by Kalman filter module 112. Process covariance noise matrix module 108 outputs process covariance noise matrix Q, and measurement covariance noise matrix module 110 outputs measurement covariance noise matrix R. Each of process covariance noise matrix Q and measurement covariance noise matrix R is received as input by Kalman filter module 112.

Kalman filter module 112 outputs Kalman state vector X, which is received as input by each of tilt correction module 114, accelerometer bias and scale factor module 116, and rate gyroscope bias and scale factor module 118. Tilt correction module 114 outputs tilt error correction values δq to attitude determination module 20. Accelerometer bias and scale factor module 116 provides Kalman accelerometer scale factor and bias error correction values E_{K-A} as input to inertial sensor compensation and correction module 118. Rate gyroscope bias and scale factor module 118 outputs Kalman rate gyroscope scale factor and bias error correction values E_{K-G}, which is received as input by inertial sensor compensation and correction module 18.

In operation, check AOA module 70 receives angle of attack 38 from, e.g., an aircraft air data system or other source. Check AOA module 70 determines whether the received angle of attack 38 is valid, such as by determining whether angle of attack 38 is within a predefined range of valid angles of attack and/or by accessing validity information included with angle of attack 38 (e.g., status field(s), bit(s), or other information indicating a validity status of angle of attack 38). Check AOA module 70 outputs angle of attack α as equal to the value (e.g., scalar value) of angle of attack 38 in response to determining that angle of attack 38 is valid. Check AOA module 70 outputs α as equal to a value of zero in response to determining that angle of attack 38 is invalid. Similarly, check TAS module 72 receives true airspeed 36 and determines a validity status of true airspeed 36 by determining whether true airspeed 36 is within a predefined range of valid true airspeeds and/or by accessing validity information included with true airspeed 36. Check TAS module 72 outputs airspeed Va as equal to the value (e.g., scalar value) of true airspeed 36 in response to determining that true airspeed 36 is valid. Check TAS module 72 outputs airspeed Va as equal to a value of zero in response to determining that true airspeed 36 is invalid.

Each of low-pass filters 76, 78, and 82 can be Butterworth filters, infinite impulse response filters, or other types of low-pass filters implemented in hardware and/or software and configured to pass signals with frequencies lower than a cutoff frequency and attenuate signals with frequencies higher than the cutoff frequency. Each of low-pass filters 76, 78, and 82 can be configured with a same or different cutoff frequency, and can be implemented using the same or different types of low-pass filters. Low-pass filter 78 receives airspeed Va and provides a filtered output of airspeed Va to velocity boost factor module 96.

Reference velocity module 74 utilizes angle of attack α and airspeed Va to produce body-axis reference velocity vector V_{ref}. That is, reference velocity module 74 uses angle of attack α to convert the received scalar airspeed Va into a vector representation of the body frame velocity by attributing the airspeed Va to the forward and vertical body-axis velocity components using angle of attack α. Low-pass filter 76 receives body-axis reference velocity vector V_{ref} and provides a low-pass filtered output of body-axis reference velocity vector V_{ref} as input to measurement vector module 104. Quaternion to direction-cosine module 80 applies a transformation matrix to attitude quaternion q^{C} representing attitude information of IMU 10 (e.g., pitch, roll, and yaw) to produce direction cosine matrix C representing the attitude information in direction-cosine form.

Each of integrate reference velocity module 88, integrate Coriolis acceleration module 90, integrate direction-cosine module 92, and integrate body accelerations module 94 integrate their respective inputs over a same time duration, such as 0.5 seconds, 1.0 seconds, or other time durations. That is, integrate reference velocity module 88 integrates body-axis reference velocity vector V_{ref} over the time duration using, e.g., trapezoidal integration or other numerical integration operations to produce integrated body-axis reference velocity vector ΣV_{ref} that is provided to measurement matrix module 102. Integrate Coriolis acceleration module 90 determines an instantaneous Coriolis acceleration force experienced by accelerometers 24A-24C (FIG. 1) as a cross product of compensated and corrected body-axis angular rates ω_{comp-B} and body-axis reference velocity vector V_{ref}. Integrate Coriolis acceleration module 90 integrates the instantaneous Coriolis acceleration over the time duration (i.e., the same time duration utilized by integrate reference velocity module 88) to produce integrated Coriolis acceleration ΣA_{C}. Integrate direction-cosine module 92 integrates direction-cosine matrix C over the same time duration to produce integrated direction-cosine matrix ΣC. Integrate body accelerations module 94 integrates compensated and corrected body-axis accelerations A_{comp-B} over the same time duration to produce integrated compensated and corrected body-axis accelerations Σ A_{comp-B}.

Accelerometer RMS module 84 receives compensated and corrected body-axis accelerations A_{comp-B} and produces accelerations root mean square A_{RMS} by computing a root mean square of the received acceleration compensated and corrected body-axis accelerations A_{comp-B} or using other central tendency techniques. Rate gyroscopes RMS module 86 receives low-pass filtered compensated and corrected body-axis angular rates ω_{comp-B} from low pass filter 82 and produces angular rates root mean square ω_{RMS} by computing a root mean square of the received filtered compensated and corrected body-axis angular rates ω_{comp-B} or using other central tendency techniques.

Velocity boost factor module 96 receives low-pass filtered airspeed Va from low-pass filter 78 and produces velocity boost factor K_{V} that is proportional to a rate of change of low-pass filtered airspeed Va with respect to time. That is, as the time rate of change of low-pass filtered airspeed Va increases, velocity boost factor K_{V} increases. As the time rate of change of low-pass filtered airspeed Va decreases, velocity boost factor K_{V} decreases. Similarly, accelerometer boost factor module 98 produces acceleration boost factor K_{A} that is proportional to a time rate of change of accelerations root mean square A_{RMS}. Rate gyroscope boost factor module 100 produces angular rate boost factor K_{ω} that is proportional to a time rate of change of angular rates root mean square ω_{RMS}.

Measurement matrix module 102, measurement vector module 104, state transition matrix module 106, process covariance noise matrix module 108, and measurement covariance noise matrix module 110 produce measurement matrix H, measurement vector y, state transition matrix φ, process covariance noise matrix Q, and measurement covariance noise matrix R, respectively, which are utilized during execution of an extended Kalman filter implemented by Kalman filter module 112 to produce Kalman state vector X that includes tilt error correction values δq, Kalman accelerometer scale factor and bias error correction values E_{K-A}, and Kalman rate gyroscope scale factor and bias error correction values E_{K-G}. Measurement matrix module 102 utilizes integrated reference velocity ΣV_{ref} and integrated direction-cosine matrix ΣC to produce measurement matrix H. Measurement vector module 104 utilizes low-pass filtered body-axis reference velocity vector V_{ref}, integrated Coriolis acceleration ΣA_{C}, integrated direction-cosine matrix ΣC, and integrated compensated and corrected body-axis accelerations ΣA_{comp-B} to generate measurement vector y. Measurement vector y represents a difference between a change in body-axis reference velocity vector V_{ref} over a time duration and a change in integrated compensated and corrected body-axis accelerations ΣA_{comp-B} over the same time duration with effects of integrated Coriolis acceleration ΣA_{C} and gravity removed (e.g., added, subtracted, or otherwise removed). For example, measurement vector module 104 can add the integrated Coriolis acceleration ΣA_{C} to the difference between the change in body-axis reference velocity vector V_{ref} and integrated compensated and corrected body-axis accelerations ΣA_{comp-B}, and can subtract a value corresponding to the acceleration due to gravity (e.g., 9.8 meters/second/second) from the resulting sum.

State transition matrix module 106 utilizes integrated direction-cosine matrix ΣC to populate state transition matrix φ utilized by Kalman filter module 112 to propagate the Kalman state forward in time. Process covariance noise matrix module 108 utilizes acceleration boost factor K_{A} and angular rate boost factor K_{ω} to produce process noise covariance matrix Q that represents an estimate of uncertainty corresponding to process noise introduced by computational uncertainties or other process noise. Measurement covariance noise matrix module utilizes velocity boost factor K_{V}, acceleration boost factor K_{A} and angular rate boost factor K_{ω} to produce measurement covariance noise matrix R that represents an estimate of uncertainty corresponding to sensor noise from accelerometers 24A-24C and rate gyroscopes 32A-32C (FIG. 1). Because each of velocity boost factor K_{V}, acceleration boost factor K_{A} and angular rate boost factor K_{ω} are proportional to a rate of change of their respective inputs (i.e., low-pass filtered airspeed Va, accelerations root mean square A_{RMS}, and angular rates root mean square ω_{RMS}), process covariance noise matrix module 108 and measurement covariance noise matrix module 110 effectively increase the effect of process covariance noise matrix Q and measurement covariance noise matrix R during execution of the extended Kalman filter implemented by Kalman filter module 112 during operational states corresponding to dynamic motion of IMU 10.

Kalman filter module 112 implements an extended Kalman filter that utilizes measurement matrix H, measurement vector y, state transition matrix φ, process covariance matrix Q, and measurement covariance matrix R to produce Kalman state vector X. Kalman state vector X can be, e.g., a 16-element vector including (in any order): two tilt error correction values, one corresponding to pitch and the other corresponding to roll; three accelerometer bias error correction values, each corresponding to one of accelerometers 24A-24C; three accelerometer scale factor error correction values, each corresponding to one of accelerometers 24A-24C; three rate gyroscope bias error correction values, each corresponding to one of rate gyroscopes 32A-32C; three rate gyroscope scale factor error correction values, each corresponding to one of rate gyroscopes 32A-32C; and two transport rate error correction values corresponding to forward pitch rates experienced to maintain level flight while moving across the surface of the Earth.

Tilt correction module 114 utilizes the two tilt error correction values and the two transport rate error correction values to produce tilt error correction values δq, which are utilized by attitude determination module 20 during propagation of attitude quaternion q^{C}, as is further described above. Accelerometer bias and scale factor module 116 applies (e.g., adds, subtracts, or otherwise applies) the three accelerometer bias error correction values to accelerometer bias error correction values determined during a previous execution (e.g., a previous iteration) of Kalman estimator module 22 to produce three updated accelerometer bias error correction values, each corresponding to one of accelerometers 24A-24C. Similarly, accelerometer bias and scale factor module 116 applies (e.g., adds, subtracts, or otherwise applies) the three accelerometer scale factor error correction values to accelerometer scale factor error correction values determined during a previous execution (e.g., a previous iteration) of Kalman estimator module 22 to produce three updated accelerometer scale factor error correction values, each corresponding to one of accelerometers 24A-24C. Accelerometer bias and scale factor module 116 outputs the three updated accelerometer bias error correction values and the three updated accelerometer scale factor error correction values as Kalman accelerometer scale factor and bias error correction values E_{K-A}, which are received as input by inertial sensor compensation and correction module 18 and utilized during accelerometer error correction operations.

Rate gyroscope bias and scale factor module 118 applies (e.g., adds, subtracts, or otherwise applies) the three rate gyroscope bias error correction values of Kalman state vector X to rate gyroscope bias error correction values determined during a previous execution (e.g., a previous iteration) of Kalman estimator module 22 to produce three updated rate gyroscope bias error correction values, each corresponding to one of rate gyroscopes 32A-32C. Similarly, rate gyroscope bias and scale factor module 118 applies (e.g., adds, subtracts, or otherwise applies) the three rate gyroscope scale factor error correction values to rate gyroscope scale factor error correction values determined during a previous execution (e.g., a previous iteration) of Kalman estimator module 22 to produce three updated rate gyroscope scale factor error correction values, each corresponding to one of rate gyroscopes 32A-32C. Rate gyroscope bias and scale factor module 118 outputs the three updated rate gyroscope bias error correction values and the three updated rate gyroscope scale factor error correction values as Kalman rate gyroscope scale factor and bias error correction values E_{K-G}, which are received as input by inertial sensor compensation and correction module 18 and utilized during rate gyroscope error correction operations.

Accordingly, IMU 10 implementing Kalman estimator module 22, iteratively and adaptively determines scale factor and bias error correction values that are applied by inertial sensor compensation and correction module 18 to outputs of accelerometers 24A-24C and rate gyroscopes 32A-32C to produce error-compensated outputs body-axis angular rates 12 and body-axis accelerations 14. As such, Kalman estimator module 22 can help to correct body-axis angular rates 12 and body-axis accelerations 14 for non-deterministic errors that can be unpredictable in nature.

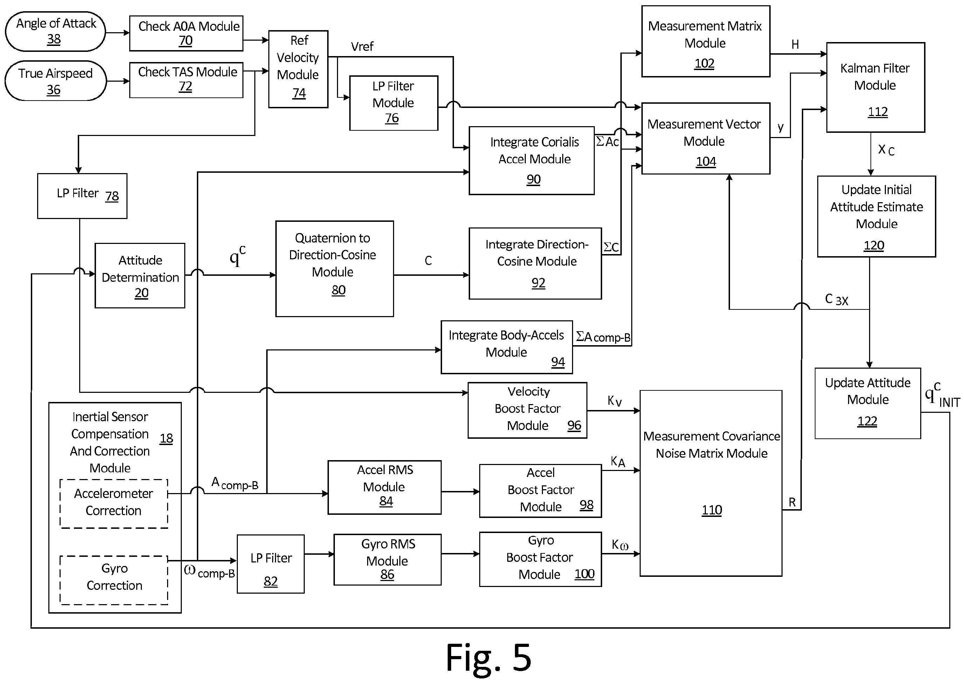

FIG. 5 is a schematic block diagram illustrating details of Kalman estimator module 22 of FIG. 1 to produce initial attitude quaternion q^{C}ᵢₙᵢₜ representing an initial attitude of IMU 10. That is, FIG. 5 illustrates details of Kalman estimator module 22 that are executed during an initialization phase of IMU 10, such as after initial power-up, reset, or other initialization phases. In general, many modules and operations of Kalman estimator module 22 described with respect to the example of FIG. 5 are substantially similar to the modules and operations of Kalman estimator module 22 that were described above with respect to FIG. 4. For purposes of clarity and ease of discussion, the same reference numbers are used for like modules, and only differences in modules and operations are described below with respect to the example of FIG. 5.

As illustrated in FIG. 5, Kalman estimator module 22 includes update initial attitude estimate module 120 and update attitude module 122, which are implemented by Kalman estimator module 22 during initialization operations. In the example of FIG. 5, measurement matrix module 102 receives integrated direction-cosine matrix ΣC from integrate direction-cosine module 92 and produces measurement matrix H, which is passed to Kalman filter module 112. Kalman filter module 112 receives measurement vector y, and measurement covariance matrix R as input and executes an extended Kalman filter to produce Kalman state vector X_{C}. Kalman state vector X_{C} is a three-element vector, the three elements corresponding to error correction values of the third row (i.e., pitch and roll components) of integrated direction-cosine matrix ΣC. Kalman filter module 112 outputs state vector X_{C} to update initial attitude estimate module 120, which applies (e.g., subtracts, adds, or otherwise applies) the error correction values from a previous execution (e.g., a previous iteration) of Kalman estimator module 22 to determine an updated initial attitude vector C_{3X}. Update initial attitude estimate module 120 outputs updated initial attitude vector C_{3X} to measurement vector module 104, which applies (e.g., multiplies) updated initial attitude vector C_{3X} to measurement vector y to produce an updated measurement vector y. Kalman estimator module 22 iteratively executes measurement vector module 104, Kalman filter module 112, and update initial attitude estimate module 120 for a threshold time duration, such as 10 seconds or other threshold time durations, to iteratively determine and modify updated initial attitude vector C_{3X}. Update initial attitude estimate module 120 provides updated initial attitude vector C_{3X} to update attitude module 122, which converts the attitude information of initial attitude vector C_{3X} to quaternion form and outputs initial attitude quaternion q^{C}ᵢₙᵢₜ to attitude determination module 20 for use during initialization operations of IMU 10.

Accordingly, IMU 10 implementing techniques of this disclosure, utilizes air data parameter values, such as true airspeed and angle of attack, to produce error-corrected angular rate and acceleration output values. IMU 10 determines vehicle attitude in the form of attitude quaternion q^{C} based on sensed acceleration and rotational position information received from accelerometers 24A-24C and gyroscopes 32A-32C. The air data parameter values are utilized by Kalman estimator module 22 to estimate sensor scale factor and bias errors that are provided as feedback to further adjust and correct the sensed output values of accelerometers 24A-24C and gyroscopes 32A-32C. Accordingly, the techniques described herein can increase an accuracy of outputs of IMU 10 (i.e., body-axis angular rates 12 and body-axis accelerations 14) by modifying the outputs to compensate for deterministic errors (e.g., temperature-dependent scale factor and bias errors, sensor non-linearity errors, and non-orthogonality errors) and correct for non-deterministic errors that can manifest as sensor scale factor and bias errors that arise during operation of (or between operations of) IMU 10.

The inertial measurement unit of the preceding paragraph can optionally include, additionally and/or alternatively, any one or more of the following features, configurations, operations and/or additional components:

The Kalman estimator module can be configured to determine the set of error correction values via an extended Kalman filter that utilizes the difference between the change in the integrated acceleration of the IMU and the change in the true airspeed of the IMU as input and produces the set of error correction values as output.

The inertial sensor assembly can further include a plurality of temperature sensors configured to sense temperature of an operating environment of the plurality of accelerometers and the plurality of rate gyroscopes. The set of error compensation values can include temperature-dependent error compensation values. The inertial sensor compensation and correction module can be configured to apply the set of error compensation values by determining the temperature-dependent error compensation values based on sensed temperature from each of the plurality of temperature sensors.

The temperature-dependent error compensation values can include temperature-dependent scale factor error compensation values, temperature-dependent bias error compensation values, and temperature-dependent non-linearity error compensation values for each of the plurality of accelerometers and each of the plurality of rate gyroscopes.

Each of the temperature-dependent scale factor error compensation values can correspond to an error in a slope of sensor output over a temperature range for a respective one of the plurality of accelerometers and the plurality of rate gyroscopes. Each of the temperature-dependent bias error compensation values can correspond to a non-zero offset error of sensor output over the temperature range for a respective one of the plurality of accelerometers and the plurality of rate gyroscopes. Each of the temperature-dependent non-linearity error compensation values can correspond to a non-linearity of the sensor output over the temperature range for a respective one of the plurality of accelerometers and the plurality of rate gyroscopes.

The set of error compensation values can include a non-orthogonality error compensation value corresponding to a non-orthogonality error of the plurality of axes.

The plurality of axes can include a first plurality of axes defining a sensor axis reference frame. The Kalman estimator module can be configured to determine the change in the integrated acceleration of the IMU by transforming the compensated acceleration from the sensor axis reference frame to a body axis reference frame defined by a second plurality of axes aligned with respect to a moving body that includes the IMU, and integrating the compensated acceleration in the body axis reference frame over the time interval.

The Kalman estimator module can be further configured to determine the set of error correction values by removing an effect of gravity from the difference between the change in the integrated acceleration of the IMU and the change in the true airspeed of the IMU.

The Kalman estimator module can be configured to remove the effect of gravity from the compensated acceleration by determining the effect of gravity based on mass attraction as a function of a radial distance between the IMU and a center of Earth.

The plurality of accelerometers can include three accelerometers. The plurality of rate gyroscopes can include three rate gyroscopes. The plurality of axes can include three axes. Each of the three accelerometers can be aligned to sense the acceleration of the IMU along one of the three axes. Each of the three rate gyroscopes can be aligned to sense the rotational rate of the IMU along one of the three axes.

A method includes sensing acceleration of an inertial measurement unit (IMU) along a plurality of axes via a plurality of accelerometers of the IMU, and sensing rotational rate of the IMU along the plurality of axes via a plurality of rate gyroscopes of the IMU. The method further includes applying a set of error compensation values to each of the sensed acceleration and the sensed rotational rate to produce a compensated acceleration and a compensated rotational rate of the IMU, determining a change in integrated acceleration of the IMU over a time interval based on the compensated acceleration and the compensated rotational rate of the IMU, and determining a set of error correction values based on a difference between the change in the integrated acceleration of the IMU and a change in true airspeed of the IMU. The method further includes applying the set of error correction values to each of the compensated acceleration and the compensated rotational rate to produce an error-corrected acceleration and an error-corrected rotational rate, and outputting the error-corrected acceleration and the error-corrected rotational rate.

The method of the preceding paragraph can optionally include, additionally and/or alternatively, any one or more of the following features, configurations, operations and/or additional components:

Determining the set of error correction values can include determining the set of error correction values via an extended Kalman filter that utilizes the difference between the change in the integrated acceleration of the IMU and the change in the true airspeed of the IMU as input and produces the set of error correction values as output.

The method can further include sensing temperature of an operating environment of the plurality of accelerometers and the plurality of rate gyroscopes via a plurality of temperature sensors of the IMU. The set of error compensation values can include temperature-dependent error compensation values. Applying the set of error compensation values can include determining the temperature-dependent error compensation values based on the sensed temperature from each of the plurality of temperature sensors.

The temperature-dependent error compensation values can include temperature-dependent scale factor error compensation values, temperature-dependent bias error compensation values, and temperature-dependent non-linearity error compensation values for each of the plurality of accelerometers and each of the plurality of rate gyroscopes.

Each of the temperature-dependent scale factor error compensation values can correspond to an error in a slope of sensor output over a temperature range for a respective one of the plurality of accelerometers and the plurality of rate gyroscopes. Each of the temperature-dependent bias error compensation values can correspond to a non-zero offset error of sensor output over the temperature range for a respective one of the plurality of accelerometers and the plurality of rate gyroscopes. Each of the temperature-dependent non-linearity error compensation values can correspond to a non-linearity of the sensor output over the temperature range for a respective one of the plurality of accelerometers and the plurality of rate gyroscopes.

The set of error compensation values can include a non-orthogonality error compensation value corresponding to a non-orthogonality error of the plurality of axes.

The plurality of axes can include a first plurality of axes defining a sensor axis reference frame. Determining the change in the integrated acceleration of the IMU can include transforming the compensated acceleration from the sensor axis reference frame to a body axis reference frame defined by a second plurality of axes aligned with respect to a moving body that includes the IMU, and integrating the compensated acceleration in the body axis reference frame over the time interval.

Therefore, it is intended that the invention not be limited to the particular embodiment(s) disclosed, but that the invention will include all embodiments falling within the scope of the appended claims.

## Claims

1. An inertial measurement unit, IMU (10) comprising:
an inertial sensor assembly (16) comprising:
a plurality of accelerometers (24a-c), each of the plurality of accelerometers (24a-c) configured to sense acceleration of the IMU (10) along one of a plurality of axes; and
a plurality of rate gyroscopes (32a-c), each of the plurality of rate gyroscopes (32a-c) configured to sense rotational rate of the IMU (10) along one of the plurality of axes;
an inertial sensor compensation and correction module (18) configured to apply a set of error compensation values to acceleration sensed by the plurality of accelerometers (24a-c) and to rotational rate sensed by the plurality of rate gyroscopes (32a-c) to produce a compensated acceleration and a compensated rotational rate of the IMU (10); and
a Kalman estimator module (22) configured to:
determine a change in integrated acceleration of the IMU (10) over a time interval based on the compensated acceleration and the compensated rotational rate of the IMU (10);
determine a body-axis reference velocity vector using a received angle of attack and a received true airspeed;
determine a set of error correction values based on a difference between the change in the integrated acceleration of the IMU(10) and a change in the body-axis reference velocity vector of the IMU (10); and
provide the set of error correction values to the inertial sensor compensation and correction module (18);
wherein the inertial sensor compensation and correction module (18) is further configured to:
apply the set of error correction values to each of the compensated acceleration and the compensated rotational rate to produce an error-corrected acceleration and an error-corrected rotational rate; and
output the error-corrected acceleration and the error-corrected rotational rate.

2. The IMU of claim 1,
wherein the Kalman estimator module (22) is configured to determine the set of error correction values via an extended Kalman filter that utilizes the difference between the change in the integrated acceleration of the IMU (10) and the change in the body-axis reference velocity vector of the IMU (10) as input and produces the set of error correction values as output.

3. The IMU of claim 1 or 2,
wherein the inertial sensor assembly (16) further comprises a plurality of temperature sensors (28a-c) configured to sense temperature of an operating environment of the plurality of accelerometers (24a-c) and the plurality of rate gyroscopes (32a-c);
wherein the set of error compensation values comprises temperature-dependent error compensation values; and
wherein the inertial sensor compensation and correction module (18) is configured to apply the set of error compensation values by determining the temperature-dependent error compensation values based on sensed temperature from each of the plurality of temperature sensors (28a-c).

4. The IMU of claim 3,
wherein the temperature-dependent error compensation values comprise temperature-dependent scale factor error compensation values, temperature-dependent bias error compensation values, and temperature-dependent non-linearity error compensation values for each of the plurality of accelerometers (24a-c) and each of the plurality of rate gyroscopes (32a-c).

5. The IMU of claim 4,
wherein each of the temperature-dependent scale factor error compensation values corresponds to an error in a slope of sensor output over a temperature range for a respective one of the plurality of accelerometers (24a-c) and the plurality of rate gyroscopes (32a-c);
wherein each of the temperature-dependent bias error compensation values corresponds to a non-zero offset error of sensor output over the temperature range for a respective one of the plurality of accelerometers (24a-c) and the plurality of rate gyroscopes (32a-c); and
wherein each of the temperature-dependent non-linearity error compensation values corresponds to a non-linearity of the sensor output over the temperature range for a respective one of the plurality of accelerometers (24a-c) and the plurality of rate gyroscopes (32a-c).

6. The IMU of any preceding claim,
wherein the set of error compensation values comprises a non-orthogonality error compensation value corresponding to a non-orthogonality error of the plurality of axes.

7. The IMU of any preceding claim,
wherein the plurality of axes comprises a first plurality of axes defining a sensor axis reference frame; and
wherein the Kalman estimator module (22) is configured to determine the change in the integrated acceleration of the IMU (10) by:
transforming the compensated acceleration from the sensor axis reference frame to a body axis reference frame defined by a second plurality of axes aligned with respect to a moving body that includes the IMU (10); and inte
grating the compensated acceleration in the body axis reference frame over the time interval.

8. The IMU of any preceding claim,
wherein the Kalman estimator module (22) is further configured to determine the set of error correction values by removing an effect of gravity from the difference between the change in the integrated acceleration of the IMU (10) and the change in the body-axis reference velocity vector of the IMU (10).

9. The IMU of any preceding claim,
wherein the Kalman estimator module (22) is further configured to determine the set of error correction values by removing an effect of Coriolis acceleration forces from the difference between the change in the integrated acceleration of the IMU (10) and the change in the body-axis reference velocity vector of the IMU (10).

10. The IMU of any preceding claim,
wherein the plurality of accelerometers (24a-c) comprises three accelerometers; wherein the plurality of rate gyroscopes (32a-c) comprises three rate gyroscopes; wherein the plurality of axes comprises three axes;
wherein each of the three accelerometers (24a-c) is aligned to sense the acceleration of
the IMU (10) along one of the three axes; and
wherein each of the three rate gyroscopes (32a-c) is aligned to sense the rotational rate of
the IMU (10) along one of the three axes.

11. A method comprising:
sensing acceleration of an inertial measurement unit, IMU (10), along a plurality of axes via a plurality of accelerometers (24a-c) of the IMU (10);
sensing rotational rate of the IMU (10) along the plurality of axes via a plurality of rate gyroscopes (32a-c) of the IMU (10);
applying a set of error compensation values to each of the sensed acceleration and the sensed rotational rate to produce a compensated acceleration and a compensated rotational rate of the IMU (10);
determining a change in integrated acceleration of the IMU (10) over a time interval based on the compensated acceleration and the compensated rotational rate of the IMU (10);
determining a body-axis reference velocity vector using a received angle of attack and a received true airspeed;
determining a set of error correction values based on a difference between the change in the integrated acceleration of the IMU (10) and a change in the body-axis reference velocity vector of the IMU (10);
applying the set of error correction values to each of the compensated acceleration and the compensated rotational rate to produce an error-corrected acceleration and an error-corrected rotational rate; and
outputting the error-corrected acceleration and the error-corrected rotational rate.

12. The method of claim 11,
wherein determining the set of error correction values comprises determining the set of error correction values via an extended Kalman filter that utilizes the difference between the change in the integrated acceleration of the IMU (10) and the change in the body-axis reference velocity vector of the IMU (10) as input and produces the set of error correction values as output.

13. The method of claim 11 or 12, further comprising:
sensing temperature of an operating environment of the plurality of accelerometers (24a-c) and the plurality of rate gyroscopes (32a-c) via a plurality of temperature sensors (28a-c) of the IMU (10);
wherein the set of error compensation values comprises temperature-dependent error compensation values; and
wherein applying the set of error compensation values comprises determining the temperature-dependent error correction values based on the sensed temperature from each of the plurality of temperature sensors (28a-c).

14. The method of claim 13,
wherein the temperature-dependent error compensation values comprise temperature-dependent scale factor error compensation values, temperature-dependent bias error compensation values, and temperature-dependent non-linearity error compensation values for each of the plurality of accelerometers (24a-c) and each of the plurality of rate gyroscopes (32a-c).

15. The method of claim 14,
wherein each of the temperature-dependent scale factor error compensation values corresponds to an error in a slope of sensor output over a temperature range for a respective one of the plurality of accelerometers (24a-c) and the plurality of rate gyroscopes (32a-c);
wherein each of the temperature-dependent bias error compensation values corresponds to a non-zero offset error of sensor output over the temperature range for a respective one of the plurality of accelerometers (24a-c) and the plurality of rate gyroscopes (32a-c); and
wherein each of the temperature-dependent non-linearity error compensation values corresponds to a non-linearity of the sensor output over the temperature range for a respective one of the plurality of accelerometers (24a-c) and the plurality of rate gyroscopes (32a-c).

## Patentansprüche

1. Inertiale Messeinheit (inertial measurement unit - IMU) (10), umfassend:
eine inertiale Sensorbaugruppe (16), die Folgendes umfasst:
eine Vielzahl von Beschleunigungsmessern (24a-c), wobei jeder der Vielzahl von Beschleunigungsmessern (24a-c) dazu konfiguriert ist, eine Beschleunigung der IMU (10) entlang einer von einer Vielzahl von Achsen zu erfassen; und
eine Vielzahl von Drehgeschwindigkeitskreiseln (32a-c), wobei jeder der Vielzahl von Drehgeschwindigkeitskreiseln (32a-c) dazu konfiguriert ist, eine Drehgeschwindigkeit der IMU (10) entlang einer von einer Vielzahl von Achsen zu erfassen;
ein Modul (18) zur Kompensation und Korrektur des inertialen Sensors, das dazu konfiguriert ist, einen Satz von Fehlerkompensationswerten auf die von der Vielzahl von Beschleunigungsmessern (24a-c) erfasste Beschleunigung und die von der Vielzahl von Drehgeschwindigkeitskreiseln (32a-c) erfasste Drehgeschwindigkeit anzuwenden, um eine kompensierte Beschleunigung und eine kompensierte Drehgeschwindigkeit der IMU (10) zu erzeugen; und
ein Kalman-Schätzmodul (22), das für Folgendes konfiguriert ist:
Bestimmen einer Änderung einer integrierten Beschleunigung der IMU (10) über ein Zeitintervall auf Grundlage der kompensierten Beschleunigung und der kompensierten Drehgeschwindigkeit der IMU (10) ;
Bestimmen eines Körper-Achsen-Referenzgeschwindigkeitsvektors unter Verwendung eines empfangenen Anstellwinkels und einer empfangenen wahren Fluggeschwindigkeit;
Bestimmen eines Satzes von Fehlerkorrekturwerten auf Grundlage einer Differenz zwischen der Änderung der integrierten Beschleunigung der IMU (10) und einer Änderung des Körper-Achsen-Referenzgeschwindigkeitsvektors der IMU (10); und Bereitstellen des Satzes von Fehlerkorrekturwerten an das Modul (18) zur Kompensation und Korrektur des inertialen Sensors;
wobei das Modul (18) zur Kompensation und Korrektur des inertialen Sensors ferner für Folgendes konfiguriert ist:
Anwenden des Satzes von Fehlerkorrekturwerten auf sowohl die kompensierte Beschleunigung als auch die kompensierte Drehgeschwindigkeit, um eine fehlerkorrigierte Beschleunigung und eine fehlerkorrigierte Drehgeschwindigkeit zu erzeugen; und
Ausgeben der fehlerkorrigierten Beschleunigung und der fehlerkorrigierten Drehgeschwindigkeit.

2. IMU nach Anspruch 1,
wobei das Kalman-Schätzmodul (22) dazu konfiguriert ist, den Satz von Fehlerkorrekturwerten über ein erweitertes Kalman-Filter zu bestimmen, das die Differenz zwischen der Änderung der integrierten Beschleunigung der IMU (10) und der Änderung des Körper-Achsen-Referenzgeschwindigkeitsvektors der IMU (10) als Eingabe verwendet und den Satz von Fehlerkorrekturwerten als Ausgabe erzeugt.

3. IMU nach Anspruch 1 oder 2,
wobei die inertiale Sensorbaugruppe (16) ferner eine Vielzahl von Temperatursensoren (28a-c) umfasst, die dazu konfiguriert ist, eine Temperatur einer Betriebsumgebung der Vielzahl von Beschleunigungsmessern (24a-c) und der Vielzahl von Drehgeschwindigkeitskreiseln (32a-c) zu erfassen;
wobei der Satz von Fehlerkompensationswerten temperaturabhängige Fehlerkompensationswerte umfasst; und wobei das Modul (18) zur Kompensation und Korrektur des inertialen Sensors dazu konfiguriert ist, den Satz von Fehlerkompensationswerten anzuwenden, indem es die temperaturabhängigen Fehlerkompensationswerte auf Grundlage einer erfassten Temperatur von jedem der Vielzahl von Temperatursensoren (28a-c) bestimmt.

4. IMU nach Anspruch 3,
wobei die temperaturabhängigen Fehlerkompensationswerte temperaturabhängige Skalierungsfaktor-Fehlerkompensationswerte, temperaturabhängige Vorspannungs-Fehlerkompensationswerte und temperaturabhängige Nichtlinearitäts-Fehlerkompensationswerte für jeden der Vielzahl von Beschleunigungsmessern (24a-c) und jeden der Vielzahl von Drehgeschwindigkeitskreiseln (32a-c) umfassen.

5. IMU nach Anspruch 4,
wobei jeder der temperaturabhängigen Skalierungsfaktor-Fehlerkompensationswerte einem Fehler in einer Steigung der Sensorausgabe über einen Temperaturbereich für einen jeweiligen der Vielzahl von Beschleunigungsmessern (24a-c) und der Vielzahl von Drehgeschwindigkeitskreiseln (32a-c) entspricht;
wobei jeder der temperaturabhängigen Vorspannungs-Fehlerkompensationswerte einen Nicht-Null-Versatz-Fehler der Sensorausgabe über den Temperaturbereich für einen jeweiligen der Vielzahl von Beschleunigungsmessern (24a-c) und der Vielzahl von Drehgeschwindigkeitskreiseln (32a-c) entspricht; und
wobei jeder der temperaturabhängigen Nichtlinearitäts-Fehlerkompensationswerte einer Nichtlinearität der Sensorausgabe über den Temperaturbereich für einen jeweiligen der Vielzahl von Beschleunigungsmessern (24a-c) und der Vielzahl von Drehgeschwindigkeitskreiseln (32a-c) entspricht.

6. IMU nach einem der vorhergehenden Ansprüche,
wobei der Satz von Fehlerkompensationswerten einen Nichtorthogonalitäts-Fehlerkompensationswert umfasst, der einem Nichtorthogonalitäts-Fehler der Vielzahl von Achsen entspricht.

7. IMU nach einem der vorhergehenden Ansprüche,
wobei die Vielzahl von Achsen eine erste Vielzahl von Achsen umfasst, die einen Sensorachsen-Referenzrahmen definiert; und wobei das Kalman-Schätzmodul (22) dazu konfiguriert ist, die Änderung der integrierten Beschleunigung der IMU (10) durch Folgendes zu bestimmen:
Umwandeln der kompensierten Beschleunigung von dem Sensorachsen-Referenzrahmen in einen Körper-Achsen-Referenzrahmen, der durch eine zweite Vielzahl von Achsen definiert ist, die in Bezug auf einen sich bewegenden Körper ausgerichtet ist, der die IMU (10) beinhaltet; und
Integrieren der kompensierten Beschleunigung im Körper-Achsen-Referenzrahmen über das Zeitintervall.

8. IMU nach einem der vorhergehenden Ansprüche,
wobei das Kalman-Schätzmodul (22) ferner dazu konfiguriert ist, den Satz von Fehlerkorrekturwerten zu bestimmen, indem es eine Auswirkung der Schwerkraft aus der Differenz zwischen der Änderung der integrierten Beschleunigung der IMU (10) und der Änderung des Körper-Achsen-Referenzgeschwindigkeitsvektors der IMU (10) entfernt.

9. IMU nach einem der vorhergehenden Ansprüche,
wobei das Kalman-Schätzmodul (22) ferner dazu konfiguriert ist, den Satz von Fehlerkorrekturwerten zu bestimmen, indem es eine Auswirkung von Coriolis-Beschleunigungskräften aus der Differenz zwischen der Änderung der integrierten Beschleunigung der IMU (10) und der Änderung des Körper-Achsen-Referenzgeschwindigkeitsvektors der IMU (10) entfernt.

10. IMU nach einem der vorhergehenden Ansprüche,
wobei die Vielzahl von Beschleunigungsmessern (24a-c) drei Beschleunigungsmesser umfasst;
wobei die Vielzahl von Drehgeschwindigkeitskreiseln (32a-c) drei Drehgeschwindigkeitskreisel umfasst;
wobei die Vielzahl von Achsen drei Achsen umfasst;
wobei jeder der drei Beschleunigungsmesser (24a-c) dazu ausgerichtet ist, die Beschleunigung der IMU (10) entlang einer der drei Achsen zu erfassen; und
wobei jeder der drei Drehgeschwindigkeitskreisel (32a-c) dazu ausgerichtet ist, die Drehgeschwindigkeit der IMU (10) entlang einer der drei Achsen zu erfassen.

11. Verfahren, umfassend:
Erfassen einer Beschleunigung einer inertialen Messeinheit (IMU) (10) entlang einer Vielzahl von Achsen über eine Vielzahl von Beschleunigungsmessern (24a-c) der IMU (10);
Erfassen einer Drehgeschwindigkeit der IMU (10) entlang der Vielzahl von Achsen über eine Vielzahl von Drehgeschwindigkeitskreiseln (32a-c) der IMU (10);
Anwenden eines Satzes von Fehlerkompensationswerten auf sowohl die erfasste Beschleunigung als auch die erfasste Drehgeschwindigkeit, um eine kompensierte Beschleunigung und eine kompensierten Drehgeschwindigkeit der IMU (10) zu erzeugen;
Bestimmen einer Änderung einer integrierten Beschleunigung der IMU (10) über ein Zeitintervall auf Grundlage der kompensierten Beschleunigung und der kompensierten Drehgeschwindigkeit der IMU (10) ;
Bestimmen eines Körper-Achsen-Referenzgeschwindigkeitsvektors unter Verwendung eines empfangenen Anstellwinkels und einer empfangenen wahren Fluggeschwindigkeit;
Bestimmen eines Satzes von Fehlerkorrekturwerten auf Grundlage einer Differenz zwischen der Änderung der integrierten Beschleunigung der IMU (10) und einer Änderung des Körper-Achsen-Referenzgeschwindigkeitsvektors der IMU (10);
Anwenden des Satzes von Fehlerkorrekturwerten auf sowohl die kompensierte Beschleunigung als auch die kompensierte Drehgeschwindigkeit, um eine fehlerkorrigierte Beschleunigung und eine fehlerkorrigierte Drehgeschwindigkeit zu erzeugen; und Ausgeben der fehlerkorrigierten Beschleunigung und der fehlerkorrigierten Drehgeschwindigkeit.

12. Verfahren nach Anspruch 11,
wobei das Bestimmen des Satzes von Fehlerkorrekturwerten ein Bestimmen des Satzes von Fehlerkorrekturwerten über ein erweitertes Kalman-Filter umfasst, das die Differenz zwischen der Änderung der integrierten Beschleunigung der IMU (10) und der Änderung des Körper-Achsen-Referenzgeschwindigkeitsvektors der IMU (10) als Eingabe verwendet und den Satz von Fehlerkorrekturwerten als Ausgabe erzeugt.

13. Verfahren nach Anspruch 11 oder 12, ferner umfassend:
Erfassen einer Temperatur einer Betriebsumgebung der Vielzahl von Beschleunigungsmessern (24a-c) und der Vielzahl von Drehgeschwindigkeitskreiseln (32a-c) über eine Vielzahl von Temperatursensoren (28a-c) der IMU (10);
wobei der Satz von Fehlerkompensationswerten temperaturabhängige Fehlerkompensationswerte umfasst; und
wobei das Anwenden des Satzes von Fehlerkompensationswerten ein Bestimmen der temperaturabhängigen Fehlerkorrekturwerte auf Grundlage der erfassten Temperatur von jedem der Vielzahl von Temperatursensoren (28a-c) umfasst.

14. Verfahren nach Anspruch 13,
wobei die temperaturabhängigen Fehlerkompensationswerte temperaturabhängige Skalierungsfaktor-Fehlerkompensationswerte, temperaturabhängige Vorspannungs-Fehlerkompensationswerte und temperaturabhängige Nichtlinearitäts-Fehlerkompensationswerte für jeden der Vielzahl von Beschleunigungsmessern (24a-c) und jeden der Vielzahl von Drehgeschwindigkeitskreiseln (32a-c) umfassen.

15. Verfahren nach Anspruch 14,
wobei jeder der temperaturabhängigen Skalierungsfaktor-Fehlerkompensationswerte einem Fehler in einer Steigung der Sensorausgabe über einen Temperaturbereich für einen jeweiligen der Vielzahl von Beschleunigungsmessern (24a-c) und der Vielzahl von Drehgeschwindigkeitskreiseln (32a-c) entspricht;
wobei jeder der temperaturabhängigen Vorspannungs-Fehlerkompensationswerte einem Nicht-Null-Versatz-Fehler der Sensorausgabe über den Temperaturbereich für einen jeweiligen der Vielzahl von Beschleunigungsmessern (24a-c) und der Vielzahl von Drehgeschwindigkeitskreiseln (32a-c) entspricht; und
wobei jeder der temperaturabhängigen Nichtlinearitäts-Fehlerkompensationswerte einer Nichtlinearität der Sensorausgabe über den Temperaturbereich für einen jeweiligen der Vielzahl von Beschleunigungsmessern (24a-c) und der Vielzahl von Drehgeschwindigkeitskreiseln (32a-c) entspricht.

## Revendications

1. Unité de mesure inertielle, IMU (10) comprenant :
un ensemble capteur inertiel (16) comprenant :
une pluralité d'accéléromètres (24a-c), chacun de la pluralité d'accéléromètres (24a-c) étant configuré pour détecter une accélération de l'IMU (10) le long de l'un d'une pluralité d'axes ; et
une pluralité de gyromètres (32a-c), chacun de la pluralité de gyromètres (32a-c) étant configuré pour détecter une vitesse de rotation de l'IMU (10) le long de l'un de la pluralité d'axes ;
un module de compensation et de correction de capteur inertiel (18) configuré pour appliquer un jeu de valeurs de compensation d'erreur à une accélération détectée par la pluralité d'accéléromètres (24a-c) et à une vitesse de rotation détectée par la pluralité de gyromètres (32a-c) pour produire une accélération compensée et une vitesse de rotation compensée de l'IMU (10) ; et
un module estimateur de Kalman (22) configuré pour :
déterminer une variation dans une accélération intégrée de l'IMU (10) pendant un intervalle de temps sur la base de l'accélération compensée et de la vitesse de rotation compensée de l'IMU (10) ;
déterminer un vecteur de vélocité de référence d'axe de corps à l'aide d'un angle d'attaque reçu et d'une vitesse-air vraie reçue ;
déterminer un jeu de valeurs de correction d'erreur sur la base d'une différence entre la variation dans l'accélération intégrée de l'IMU (10) et une variation dans le vecteur de vélocité de référence d'axe de corps de l'IMU (10) ; et
fournir le jeu de valeurs de correction d'erreur au module de compensation et de correction de capteur inertiel (18) ;
dans laquelle le module de compensation et de correction de capteur inertiel (18) est en outre configuré pour :
appliquer le jeu de valeurs de correction d'erreur à chacune de l'accélération compensée et de la vitesse de rotation compensée pour produire une accélération à erreur corrigée et une vitesse de rotation à erreur corrigée ; et
délivrer en sortie l'accélération à erreur corrigée et la vitesse de rotation à erreur corrigée.

2. IMU selon la revendication 1,
dans laquelle le module estimateur de Kalman (22) est configuré pour déterminer le jeu de valeurs de correction d'erreur via un filtre de Kalman étendu qui utilise la différence entre la variation dans l'accélération intégrée de l'IMU (10) et la variation dans le vecteur de vélocité de référence d'axe de corps de l'IMU (10) en entrée et produit le jeu de valeurs de correction d'erreur en sortie.

3. IMU selon la revendication 1 ou 2,
dans laquelle l'ensemble capteur inertiel (16) comprend en outre une pluralité de capteurs de température (28a-c) configurés pour détecter une température d'un environnement opérationnel de la pluralité d'accéléromètres (24a-c) et de la pluralité de gyromètres (32a-c) ;
dans laquelle le jeu de valeurs de compensation d'erreur comprend des valeurs de compensation d'erreur dépendantes de la température ; et
dans laquelle le module de compensation et de correction de capteur inertiel (18) est configuré pour appliquer le jeu de valeurs de compensation d'erreur par la détermination des valeurs de compensation d'erreur dépendantes de la température sur la base d'une température détectée par chacun de la pluralité de capteurs de température (28a-c).

4. IMU selon la revendication 3,
dans laquelle les valeurs de compensation d'erreur dépendantes de la température comprennent des valeurs de compensation d'erreur de facteur d'échelle dépendantes de la température, des valeurs de compensation d'erreur de polarisation dépendantes de la température et des valeurs de compensation d'erreur de non-linéarité dépendantes de la température pour chacun de la pluralité d'accéléromètres (24a-c) et chacun de la pluralité de gyromètres (32a-c).

5. IMU selon la revendication 4,
dans laquelle chacune des valeurs de compensation d'erreur de facteur d'échelle dépendantes de la température correspond à une erreur dans une pente de sortie de capteur sur une plage de températures pour l'un respectif de la pluralité d'accéléromètres (24a-c) et de la pluralité de gyromètres (32a-c) ;
dans laquelle chacune des valeurs de compensation d'erreur de polarisation dépendantes de la température correspond à une erreur de décalage non nulle de sortie de capteur sur la plage de températures pour l'un respectif de la pluralité d'accéléromètres (24a-c) et de la pluralité de gyromètres (32a-c) ; et
dans laquelle chacune des valeurs de compensation d'erreur de non-linéarité dépendantes de la température correspond à une non-linéarité de la sortie de capteur sur la plage de températures pour l'un respectif de la pluralité d'accéléromètres (24a-c) et de la pluralité de gyromètres (32a-c) .

6. IMU selon une quelconque revendication précédente,
dans laquelle le jeu de valeurs de compensation d'erreur comprend une valeur de compensation d'erreur de non-orthogonalité correspondant à une erreur de non-orthogonalité de la pluralité d'axes.

7. IMU selon une quelconque revendication précédente,
dans laquelle la pluralité d'axes comprend une première pluralité d'axes définissant un cadre de référence d'axe de capteur ; et
dans laquelle le module estimateur de Kalman (22) est configuré pour déterminer la variation dans l'accélération intégrée de l'IMU (10) par :
la transformation de l'accélération compensée du cadre de référence d'axe de capteur à un cadre de référence d'axe de corps défini par une seconde pluralité d'axes alignés par rapport à un corps mobile qui inclut l'IMU (10) ; et
l'intégration de l'accélération compensée dans le cadre de référence d'axe de corps pendant l'intervalle de temps.

8. IMU selon une quelconque revendication précédente,
dans laquelle le module estimateur de Kalman (22) est en outre configuré pour déterminer le jeu de valeurs de correction d'erreur par l'élimination d'un effet de la gravité à partir de la différence entre la variation dans l'accélération intégrée de l'IMU (10) et la variation dans le vecteur de vélocité de référence d'axe de corps de l'IMU (10).

9. IMU selon une quelconque revendication précédente,
dans laquelle le module estimateur de Kalman (22) est en outre configuré pour déterminer le jeu de valeurs de correction d'erreur par l'élimination d'un effet de forces d'accélération de Coriolis à partir de la différence entre la variation dans l'accélération intégrée de l'IMU (10) et la variation dans le vecteur de vélocité de référence d'axe de corps de l'IMU (10).

10. IMU selon une quelconque revendication précédente,
dans laquelle la pluralité d'accéléromètres (24a-c) comprend trois accéléromètres ;
dans laquelle la pluralité de gyromètres (32a-c) comprend trois gyromètres ;
dans laquelle la pluralité d'axes comprend trois axes ;
dans laquelle chacun des trois accéléromètres (24a-c) est aligné pour détecter l'accélération de l'IMU (10) le long de l'un des trois axes ; et
dans laquelle chacun des trois gyromètres (32a-c) est aligné pour détecter la vitesse de rotation de l'IMU (10) le long de l'un des trois axes.

11. Procédé comprenant :
la détection d'une accélération d'une unité de mesure inertielle, IMU (10), le long d'une pluralité d'axes via une pluralité d'accéléromètres (24a-c) de l'IMU (10) ;
la détection d'une vitesse de rotation de l'IMU (10) le long de la pluralité d'axes via une pluralité de gyromètres (32a-c) de l'IMU (10) ;
l'application d'un jeu de valeurs de compensation d'erreur à chacune de l'accélération détectée et de la vitesse de rotation détectée pour produire une accélération compensée et une vitesse de rotation compensée de l'IMU (10) ;
la détermination d'une variation dans une accélération intégrée de l'IMU (10) pendant un intervalle de temps sur la base de l'accélération compensée et de la vitesse de rotation compensée de l'IMU (10) ;
la détermination d'un vecteur de vélocité de référence d'axe de corps à l'aide d'un angle d'attaque reçu et d'une vitesse-air vraie reçue ;
la détermination d'un jeu de valeurs de correction d'erreur sur la base d'une différence entre la variation dans l'accélération intégrée de l'IMU (10) et une variation dans le vecteur de vélocité de référence d'axe de corps de l'IMU (10) ;
l'application du jeu de valeurs de correction d'erreur à chacune de l'accélération compensée et de la vitesse de rotation compensée pour produire une accélération à erreur corrigée et une vitesse de rotation à erreur corrigée ; et
la sortie de l'accélération à erreur corrigée et de la vitesse de rotation à erreur corrigée.

12. Procédé selon la revendication 11,
dans lequel la détermination du jeu de valeurs de correction d'erreur comprend la détermination du jeu de valeurs de correction d'erreur via un filtre de Kalman étendu qui utilise la différence entre la variation dans l'accélération intégrée de l'IMU (10) et la variation dans le vecteur de vélocité de référence d'axe de corps de l'IMU (10) en entrée et produit le jeu de valeurs de correction d'erreur en sortie.

13. Procédé selon la revendication 11 ou 12, comprenant en outre :
la détection d'une température d'un environnement opérationnel de la pluralité d'accéléromètres (24a-c) et de la pluralité de gyromètres (32a-c) via une pluralité de capteurs de température (28a-c) de l'IMU (10) ;
dans lequel le jeu de valeurs de compensation d'erreur comprend des valeurs de compensation d'erreur dépendantes de la température ; et
dans lequel l'application du jeu de valeurs de compensation d'erreur comprend la détermination des valeurs de correction d'erreur dépendantes de la température sur la base de la température détectée par chacun de la pluralité de capteurs de température (28a-c).

14. Procédé selon la revendication 13,
dans lequel les valeurs de compensation d'erreur dépendantes de la température comprennent des valeurs de compensation d'erreur de facteur d'échelle dépendantes de la température, des valeurs de compensation d'erreur de polarisation dépendantes de la température et des valeurs de compensation d'erreur de non-linéarité dépendantes de la température pour chacun de la pluralité d'accéléromètres (24a-c) et chacun de la pluralité de gyromètres (32a-c).

15. Procédé selon la revendication 14,
dans lequel chacune des valeurs de compensation d'erreur de facteur d'échelle dépendantes de la température correspond à une erreur dans une pente de sortie de capteur sur une plage de températures pour l'un respectif de la pluralité d'accéléromètres (24a-c) et de la pluralité de gyromètres (32a-c) ;
dans lequel chacune des valeurs de compensation d'erreur de polarisation dépendantes de la température correspond à une erreur de décalage non nulle de sortie de capteur sur la plage de températures pour l'un respectif de la pluralité d'accéléromètres (24a-c) et de la pluralité de gyromètres (32a-c) ; et
dans lequel chacune des valeurs de compensation d'erreur de non-linéarité dépendantes de la température correspond à une non-linéarité de la sortie de capteur sur la plage de températures pour l'un respectif de la pluralité d'accéléromètres (24a-c) et de la pluralité de gyromètres (32a-c).
